(19) Europäisches Patentamt

European Patent Office

Office européen des brevets

(11) **EP 4 517 876 A1**

(12) # EUROPEAN PATENT APPLICATION

(43) Date of publication:
**05.03.2025 Bulletin 2025/10**

(21) Application number: **24196740.5**

(22) Date of filing: **27.08.2024**

(51) International Patent Classification (IPC):
*H01M 4/36* $^{(2006.01)}$   *H01M 4/38* $^{(2006.01)}$
*H01M 4/62* $^{(2006.01)}$

(52) Cooperative Patent Classification (CPC):
**H01M 4/386; H01M 4/366; H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.09.2023 US 202363579965 P**

(71) Applicant: **Largan Medical Co., Ltd.
Taichung City 408 (TW)**

(72) Inventors:
• **CHEN, Wei-Yuan
408 Taichung City (TW)**

• **CHEN, Po-Tsun
408 Taichung City (TW)**
• **WANG, Tzu Lien
408 Taichung City (TW)**
• **TSAI, Cheng-Yu
408 Taichung City (TW)**
• **TENG, Chun-Hung
408 Taichung City (TW)**

(74) Representative: **Berggren Oy
P.O. Box 16
Eteläinen Rautatiekatu 10A
00101 Helsinki (FI)**

(54) **COMPOSITION, ANODE AND BATTERY**

(57)      A composition includes a core-shell structure. The core-shell structure includes a core material and a shell material. The shell material is farther away from a center of the core-shell structure than the core material. The core material includes a structural element oxide. The structural element oxide includes a structural element. The structural element includes at least two selected from the group consisting of lithium, titanium, niobium, cobalt, copper, tin, silicon, iron, manganese and nickel. The shell material includes a mixed material. The mixed material includes a modified silicon material. The modified silicon material includes a silicon material and a polymer.

5 µm

Fig. 2A

**Description**

**BACKGROUND**

Technical Field

The present disclosure relates to a composition, an anode and a battery. More particularly, the present disclosure relates to a composition, an anode and a battery which can improve the safety, service life, stability and capacity of the battery.

Description of Related Art

The current goals of research and development of batteries are to achieve the demands of high energy density, high working voltage, fast charging speed and long cycle life. The commonly used materials for anodes are carbon or graphite nowadays. In the cycle process of high current, the carbon or graphite, which mostly has a layered structure, cannot withstand the rapid intercalation and deintercalation of ions. Therefore, it is prone to an irreversible collapse of the structure, resulting in reducing the capacity and storage life. It is also prone to polarization when the current density is too high, which makes the lithium ion be reduced into lithium metal and form lithium dendrite on the surface of the electrode pieces, resulting in short circuit in the battery and the safety concerns.

Moreover, the theoretical energy density of graphite is far lower than the requirement of kinetic energy of large electric devices, such as electric cars. Therefore, silicon material with high energy density is introduced to be a new anode material, which has become a trend in the development of the lithium batteries in the future. However, it has been shown in the studies that when a battery, in which silicon material is added, undergoes several charge-discharge cycles, the anode volume will extremely change and the material will even crack because the lithium ions are repeatedly intercalated and moved out from the silicon materials. The structural stability of the anode is seriously affected, resulting in significant loss of battery life.

**SUMMARY**

According to one aspect of the present disclosure, a composition includes a core-shell structure. The core-shell structure includes a core material and a shell material. The shell material is farther away from a center of the core-shell structure than the core material. The core material includes a structural element oxide. The structural element oxide includes a structural element. The structural element includes at least two selected from the group consisting of lithium, titanium, niobium, cobalt, copper, tin, silicon, iron, manganese and nickel. The shell material includes a mixed material. The mixed material includes a modified silicon material. The modified silicon material includes a silicon material and a polymer.

According to the composition of the foregoing aspect, when a particle diameter of the core material at D50 is cD50, the following condition can be satisfied: $100.0 \ nm \leq cD50 \leq 80000.0 \ nm$.

According to the composition of the foregoing aspect, when a particle diameter of the silicon material at D50 is sD50, the following condition can be satisfied: $10.0 \ nm \leq sD50 \leq 3000.0 \ nm$.

According to the composition of the foregoing aspect, when a particle diameter of the core material at D50 is cD50, and a particle diameter of the silicon material at D50 is sD50, the following condition can be satisfied: $1.0 \leq cD50/sD50 \leq 8000.0$.

According to the composition of the foregoing aspect, wherein a weight of the core material in the core-shell structure can be larger than a weight of the silicon material in the core-shell structure.

According to the composition of the foregoing aspect, wherein the structural element oxide can be a niobium-titanium complex oxide.

According to the composition of the foregoing aspect, when a weight of the niobium-titanium complex oxide relative to the core-shell structure is Wtn, and a weight of the silicon material relative to the core-shell structure is Ws, the following condition can be satisfied: $10.0 \leq Wtn/Ws \leq 500.0$.

According to the composition of the foregoing aspect, wherein the niobium-titanium complex oxide can be a doped niobium-titanium complex oxide.

According to the composition of the foregoing aspect, wherein the doped niobium-titanium complex oxide can include at least one doped element, the at least one doped element can be at least one selected from the group consisting of lithium, manganese, magnesium, iron, copper, cobalt, gallium, tantalum, tungsten, fluorine, phosphorus, sodium and molybdenum.

According to the composition of the foregoing aspect, wherein the at least one doped element can be at least one selected from the group consisting of lithium, manganese, magnesium, iron, copper, fluorine and phosphorus.

According to the composition of the foregoing aspect, wherein the polymer can be polymerized from at least two types of monomers, the at least two types of monomers can include a first monomer and a second monomer. The first monomer can include a siloxane group, and the second monomer can include a carboxyl group or an ester group. The first monomer can be closer to the silicon material than the second monomer.

According to the composition of the foregoing aspect, wherein the silicon material and the polymer can be covalent bonded.

According to the composition of the foregoing aspect, wherein the mixed material can further include a carbon material.

According to the present disclosure, an anode includes the aforementioned composition.

According to the anode of the foregoing aspect, when a weight of the core material in the anode is tWc, and a weight of the silicon material in the anode is tWs, the following condition can be satisfied: $0.1 \leq tWc/tWs \leq 100.0$.

According to the present disclosure, a battery includes the aforementioned anode.

According to the battery of the foregoing aspect, when a maximum among a discharge volumetric capacity of a first cycle to a discharge volumetric capacity of a twentieth cycle of the battery is VMax, the following condition can be satisfied: $100 \text{ mAh/cm}^3 \leq VMax \leq 800 \text{ mAh/cm}^3$.

According to the battery of the foregoing aspect, when a discharge volumetric capacity of a fifth cycle of the battery is V5, and a discharge volumetric capacity of a tenth cycle of the battery is V10, the following condition can be satisfied: $0.85 \leq V10/V5$.

According to the battery of the foregoing aspect, when a discharge volumetric capacity of a fifth cycle of the battery is V5, and a discharge volumetric capacity of a fiftieth cycle of the battery is V50, the following condition can be satisfied: $0.80 \leq V50/V5$.

According to the battery of the foregoing aspect, when a discharge volumetric capacity of a fifth cycle of the battery is V5, and a discharge volumetric capacity of a one-hundredth cycle of the battery is V100, the following condition can be satisfied: $0.70 \leq V100N5$.

According to the battery of the foregoing aspect, when a total number of Coulombic efficiency greater than 90% and smaller than 110% in first twenty cycles of the battery is n90E20, the following condition can be satisfied: $15 \leq n90E20 \leq 20$.

According to another aspect of the present disclosure, a composition includes a core-shell structure. The core-shell structure includes a core material and a shell material. The shell material is farther away from a center of the core-shell structure than the core material. The core material includes a structural element oxide. The structural element oxide includes a niobium-titanium complex oxide. The shell material includes a mixed material. The mixed material includes a silicon material. When a covering ratio of the silicon material relative to the core material is PCs, the following condition is satisfied: $20.0\% \leq PCs \leq 100.0\%$.

According to the composition of the foregoing aspect, when a total number of particles of the niobium-titanium complex oxide in the core-shell structure is Qtn, and a total number of particles of the silicon material in the core-shell structure is Qs, the following condition can be satisfied: $0.1 \leq Log(Qs/Qtn) < 10.0$.

According to the composition of the foregoing aspect, when the covering ratio of the silicon material relative to the core material is PCs, the following condition can be satisfied: $40.0\% \leq PCs \leq 95.0\%$.

According to the composition of the foregoing aspect, when the total number of particles of the niobium-titanium complex oxide in the core-shell structure is Qtn, and the total number of particles of the silicon material in the core-shell structure is Qs, the following condition can be satisfied: $2.5 \leq Log(Qs/Qtn) \leq 7.5$.

According to the composition of the foregoing aspect, when a particle diameter of the niobium-titanium complex oxide is Dtn, and a particle diameter of the silicon material at D50 is sD50, the following condition can be satisfied: $20.0 \leq Dtn/sD50 \leq 500.0$.

According to the composition of the foregoing aspect, wherein the niobium-titanium complex oxide can be a doped niobium-titanium complex oxide.

According to the composition of the foregoing aspect, wherein the doped niobium-titanium complex oxide can include at least one doped element, and the at least one doped element can be at least one selected from the group consisting of lithium, manganese, magnesium, iron, copper, fluorine and phosphorus.

According to the composition of the foregoing aspect, when a weight of the niobium-titanium complex oxide relative to the core-shell structure is Wtn, and a weight of the silicon material relative to the core-shell structure is Ws, the following condition can be satisfied: $20.0 \leq Wtn/Ws \leq 300.0$.

According to the present disclosure, an anode includes the aforementioned composition.

According to the present disclosure, a battery includes the aforementioned anode.

According to another aspect of the present disclosure, a composition includes a core-shell structure. The core-shell structure includes a core material and a shell material. The shell material is farther away from a center of the core-shell structure than the core material. The core material is at least one selected from the group consisting of a carbon active material, a structural element mixed oxide and a tin alloy. The shell material includes a mixed material. The mixed material includes a modified silicon material. The modified silicon material includes a silicon material and a polymer. The polymer includes a siloxane group. When a particle diameter of the core material at D50 is cD50, and a particle diameter of the silicon material at D50 is sD50, the following condition is satisfied: $1.0 \leq cD50/sD50 \leq 8000.0$.

According to the composition of the foregoing aspect, when the particle diameter of the core material at D50 is cD50, and the particle diameter of the silicon material at D50 is sD50, the following condition can be satisfied: $50.0 \leq cD50/sD50 \leq 500.0$.

## BRIEF DESCRIPTION OF THE DRAWINGS

The present disclosure can be more fully understood by reading the following detailed description of the embodiment, with reference made to the accompanying drawings as follows:

Fig. 1 is a scanning electron microscopy image of a core-shell structure surface of the battery according to the comparative embodiment.

Fig. 2A is a scanning electron microscopy image of a core-shell structure surface of the battery according to the 1st embodiment.

Fig. 2B is a scanning electron microscopy image of the core-shell structure surface in an area of $0.02 \times \pi R^2$ $\mu m^2$ according to the 1st embodiment.

Fig. 3 is an element distribution image of the core-shell structure surface according to the 1st embodiment.

Fig. 4 is an overlapping result of the scanning electron microscopy image and the element distribution image of the core-shell structure surface according to the 1st embodiment.

## DETAILED DESCRIPTION

According to the present disclosure, a composition is provided, which includes a core-shell structure. The core-shell structure includes a core material and a shell material. The shell material is farther away from a center of the core-shell structure than the core material. The center can represent a core of the core-shell structure in the three-dimensional space.

The core material includes a structural element oxide. The structural element oxide includes a structural element. The structural element includes at least two selected from the group consisting of lithium, titanium, niobium, cobalt, copper, tin, silicon, iron, manganese and nickel. The shell material includes a mixed material. The mixed material includes a modified silicon material. The modified silicon material includes a silicon material and a polymer.

Alternatively, the core material includes a structural element oxide. The structural element oxide includes a niobium-titanium complex oxide. The shell material includes a mixed material. The mixed material includes a silicon material.

Alternatively, the core material is at least one selected from the group consisting of a carbon active material, a structural element mixed oxide and a tin alloy. The shell material includes a mixed material. The mixed material includes a modified silicon material. The modified silicon material includes a silicon material and a polymer. The polymer includes a siloxane group.

Therefore, the present disclosure uses the principles of opposite electrical attraction and heteroaggregation, so the core material with a relatively large particle diameter and the shell material with a relatively small particle diameter forms the core-shell structure by a self-assembly method. It not only simplifies the manufacturing process and increases the overall contact area of the core material and the shell material, but is also favorable for strengthening the stability of the core-shell structure and increasing the energy density. The core material can be a compound formed by at least two of the structural element. It can have high conductivity, which is favorable for strengthening the fast charging performance and effectively reduce the resistance value of the battery. It can also have high mechanical stability, which is favorable for the battery to adapt to larger current density and maintain the integrity of the overall structure. it can further have high heat resistance, which is favorable for improving the safety and service life of the battery in high temperature environments. The shell material can include the silicon material. The surface of the silicon material can be modified by the polymer, so that the polymer forms an elastic film around the outer of the silicon material, which effectively provides a binding effect and is favorable for reducing the problem of cracking caused by dramatic volume changes of the silicon material. Because the polymer can be conductive, it is favorable for increasing the dispersion degree of the silicon material. It covers the outer surface of the core material more evenly and tightly and improves the covering ratio, which avoids excessive agglomeration of the silicon material resulting in poor conductivity in the internal area. It is less prone to oxidation and reduction which leads to an irreversible capacity loss. In addition, the core material is selected from the carbon active material, which is favorable for improving the conductivity of the silicon material. Also, the core material is selected from the structural element mixed oxide or the tin alloy, which is favorable for improving the charging stability and overall capacity of the battery.

When a covering ratio of the silicon material relative to the core material is PCs, the following condition is satisfied: $20.0\% \leq PCs \leq 100.0\%$. By increasing the covering ratio of the silicon material, it not only reduces the stress caused by the volume expansion of the silicon material due to agglomeration, but also increases the dispersion of the silicon material. It can be more evenly and tightly covered on the outer surface of the core material to increase the overall contact area between the core material and the silicon material, which is favorable for improving the conductivity and energy density. Moreover, the following condition can be satisfied: $40.0\% \leq PCs \leq 95.0\%$. Moreover, the following condition can be satisfied: $25.0\% \leq PCs \leq 98.0\%$. Moreover, the following condition can be satisfied: $30.0\% \leq PCs \leq 96.0\%$. Moreover, the following condition can be satisfied: $35.0\% \leq PCs \leq 94.0\%$. Moreover, the following condition can be satisfied: $40.0\% \leq PCs \leq 92.0\%$. Moreover, the following condition can be satisfied: $45.0\% \leq PCs \leq 90.0\%$.

When a particle diameter of the core material at D50 is cD50, and a particle diameter of the silicon material at D50 is sD50, the following condition is satisfied: $1.0 \leq cD50/sD50 \leq 8000.0$. By having a suitable size ratio between the particle diameter of the core material and the particle diameter of the silicon material, it is favorable for the silicon material covering the outer surface layer of the core material more evenly and tightly. Moreover, the following condition can be satisfied: $50.0 \leq cD50/sD50 \leq 500.0$. Moreover, the following condition can be satisfied: $10.0 \leq cD50/sD50 \leq 5000.0$. Moreover, the following condition can be satisfied: $20.0 \leq cD50/sD50 \leq 1000.0$. Moreover, the following condition can be satisfied: $30.0 \leq cD50/sD50 \leq 800.0$. Moreover, the following condition can be satisfied: $35.0 \leq cD50/sD50 \leq 500.0$. Moreover, the following condition can be satisfied: $40.0 \leq cD50/sD50 \leq 300.0$.

When the particle diameter of the core material at D50 is cD50, the following condition can be satisfied: $100.0 \, nm \leq cD50 \leq 80000.0 \, nm$. By selecting the core material with suitable particle diameter, it is favorable for reducing the time required for ion conduction and enhancing the rate performance. Moreover, the following condition can be satisfied: $200.0 \, nm \leq cD50 \leq 70000.0 \, nm$. Moreover, the following condition can be satisfied: $400.0 \, nm \leq cD50 \leq 50000.0 \, nm$. Moreover, the following condition can be satisfied: $600.0 \, nm \leq cD50 \leq 40000.0 \, nm$. Moreover, the following condition can be satisfied: $800.0 \, nm \leq cD50 \leq 30000.0 \, nm$. Moreover, the following condition can be satisfied: $1000.0 \, nm \leq cD50 \leq 20000.0 \, nm$.

When the particle diameter of the silicon material at D50 is sD50, the following condition can be satisfied: $10.0 \, nm \leq sD50 \leq 3000.0 \, nm$. By selecting the silicon material with smaller particle diameter, it is favorable for reducing the stress caused by the volume expansion of the silicon material. Moreover, the following condition can be satisfied: $10.0 \, nm \leq sD50 \leq 10000.0 \, nm$. Moreover, the following condition can be satisfied: $10.0 \, nm \leq sD50 \leq 2000.0 \, nm$. Moreover, the following condition can be satisfied: $10.0 \, nm \leq sD50 \leq 1000.0 \, nm$. Moreover, the following condition can be satisfied: $10.0 \, nm \leq sD50 \leq 500.0 \, nm$. Moreover, the following condition can be satisfied: $20.0 \, nm \leq sD50 \leq 400.0 \, nm$. Moreover, the following condition can be satisfied: $30.0 \, nm \leq sD50 \leq 300.0 \, nm$. Moreover, the following condition can be satisfied: $40.0 \, nm \leq sD50 \leq 250.0 \, nm$. Moreover, the following condition can be satisfied: $50.0 \, nm \leq sD50 \leq 200.0 \, nm$. Moreover, the following condition can be satisfied: $60.0 \, nm \leq sD50 \leq 150.0 \, nm$. Moreover, the following condition can be satisfied: $70.0 \, nm \leq sD50 \leq 100.0 \, nm$.

A weight of the core material in the core-shell structure can be larger than a weight of the silicon material in the core-shell structure. By having a suitable weight ratio of the core material and the silicon material in the core-shell structure, it is favorable for maintaining a balance between the stability and the improvement of energy density of the core-shell structure.

The structural element oxide can be a niobium-titanium complex oxide. In the lithium insertion process of the niobium-titanium complex oxide, the crystal volume change is small and high mechanical stability is obtained. Therefore, it can adapt to larger current density and maintain the integrity of the overall structure, which avoids the problem of poor cycle life of the battery due to structural damage.

When a weight of the niobium-titanium complex oxide relative to the core-shell structure is Wtn, and a weight of the silicon material relative to the core-shell structure is Ws, the following condition can be satisfied: $10.0 \leq Wtn/Ws \leq 500.0$. By combining the niobium-titanium complex oxide and the silicon material in a suitable ratio, it is favorable for improving the charging efficiency and energy density of the battery. Moreover, the following condition can be satisfied: $20.0 \leq Wtn/Ws \leq 300.0$. Therefore, it is favorable for strengthening the stability and increasing the energy density of the battery during the high current charging and discharging process. Moreover, the following condition can be satisfied: $25.0 \leq Wtn/Ws \leq 280.0$. Moreover, the following condition can be satisfied: $30.0 \leq WtnNVs \leq 260.0$. Moreover, the following condition can be satisfied: $35.0 \leq Wtn/Ws \leq 240.0$. Moreover, the following condition can be satisfied: $38.0 \leq Wtn/Ws \leq 220.0$. Moreover, the following condition can be satisfied: $40.0 \leq Wtn/Ws \leq 210.0$.

The niobium-titanium complex oxide can be a doped niobium-titanium complex oxide. By changing the chemical properties of the niobium-titanium complex oxide through doping, it is favorable for reducing the difficulty of electron and ion migration, which enhances the conductivity of the niobium-titanium complex oxide.

The doped niobium-titanium complex oxide can include at least one doped element. The at least one doped element can be at least one selected from the group consisting of lithium, manganese, magnesium, iron, copper, cobalt, gallium, tantalum, tungsten, fluorine, phosphorus, sodium and molybdenum. By selecting elements with high conductivity for doping, it is favorable for increasing the conductivity of the doped niobium-titanium complex oxide and enhancing the fast charging performance of the battery. Alternatively, by selecting lighter elements for doping, it is favorable for increasing energy density.

The at least one doped element can be at least one selected from the group consisting of lithium, manganese, magnesium, iron, copper, fluorine and phosphorus. By doping the aforementioned doped element, it is favorable for maintaining the reversibility of the lithium ion intercalation and migration out of the niobium-titanium complex oxide structure during the redox process, and reducing the increase in resistance value after multiple redox processes.

The polymer can be polymerized from at least two types of monomers. The at least two types of monomers can include a first monomer and a second monomer. The first monomer can include a siloxane group. The second monomer can include a carboxyl group or an ester group. The first monomer can be closer to the silicon material than the second monomer. By the condensation of the first monomer and the silicon material to form a stable siloxane structure, it is favorable for maintaining the integrity of the polymer. Furthermore, because the first monomer and the second monomer contain unsaturated functional groups, the addition polymerization and copolymerization of multiple monomers form the high molecular weight polymer, which is favorable for strengthening the protective ability of the high molecular weight polymer.

The silicon material and the polymer can be covalent bonded. By the covalent bonding on the outer surface of the silicon material, the protective layer of the high molecular weight polymer is formed. Through the elasticity of the high molecular weight polymer, it can adapt to the dramatic volume changes of the silicon material and maintain the integrity of the overall structure during charging and discharging.

The mixed material can further include a carbon material. By adding the carbon material to the shell material, it is favorable for improving the conductive efficiency of the battery.

When a total number of particles of the niobium-titanium complex oxide in the core-shell structure is Qtn, and a total number of particles of the silicon material in the core-shell structure is Qs, the following condition can be satisfied: $0.1 \leq$ Log(Qs/Qtn) < 10.0. By having the niobium-titanium complex oxide and the silicon material in the core-shell structure with a suitable ratio of the total number of particles, it is favorable for increasing the covering ratio of the silicon material and reducing the ratio of the silicon material which is not adsorbed by the niobium-titanium complex oxide. Moreover, the following condition can be satisfied: $2.5 \leq$ Log(Qs/Qtn) $\leq 7.5$. Moreover, the following condition can be satisfied: $0.5 \leq$ Log(Qs/Qtn) $\leq 9.0$. Moreover, the following condition can be satisfied: $1.0 \leq$ Log(Qs/Qtn) $\leq 8.0$. Moreover, the following condition can be satisfied: $1.5 \leq$ Log(Qs/Qtn) $\leq 7.0$. Moreover, the following condition can be satisfied: $2.0 \leq$ Log(Qs/Qtn) $\leq 6.0$. Moreover, the following condition can be satisfied: $3.0 \leq$ Log(Qs/Qtn) $\leq 6.5$. Moreover, the following condition can be satisfied: $3.2 \leq$ Log(Qs/Qtn) $\leq 6.0$.

When a particle diameter of the niobium-titanium complex oxide is Dtn, and the particle diameter of the silicon material at D50 is sD50, the following condition can be satisfied: $20.0 \leq$ Dtn/sD50 $\leq 500.0$. By having a suitable size ratio between the particle diameter of the niobium-titanium complex oxide and the particle diameter of the silicon material, it is favorable for increasing the covering ratio and increasing energy density. Moreover, the following condition can be satisfied: $25.0 \leq$ Dtn/sD50 $\leq 450.0$. Moreover, the following condition can be satisfied: $30.0 \leq$ Dtn/sD50 $\leq 400.0$. Moreover, the following condition can be satisfied: $35.0 \leq$ Dtn/sD50 $\leq 350.0$. Moreover, the following condition can be satisfied: $40.0 \leq$ Dtn/sD50 $\leq 300.0$. Moreover, the following condition can be satisfied: $45.0 \leq$ DtnIsD50 $\leq 250.0$.

According to the present disclosure, an anode is provided, which includes the aforementioned composition.

When a weight of the core material in the anode is tWc, and a weight of the silicon material in the anode is tWs, the following condition can be satisfied: $0.1 \leq$ tWc/tWs $\leq 100.0$. By forming the anode with the suitable weight ratio of the core material and the silicon material, it is favorable for enhancing the stability and increasing energy density of the battery during high current charging and discharging process. Moreover, the following condition can be satisfied: $0.2 \leq$ tWc/tWs $\leq 80.0$. Moreover, the following condition can be satisfied: $0.4 <$ tWc/tWs $\leq 60.0$. Moreover, the following condition can be satisfied: $0.6 \leq$ tWc/tWs $\leq 50.0$. Moreover, the following condition can be satisfied: $0.7 \leq$ tWc/tWs $\leq 40.0$. Moreover, the following condition can be satisfied: $0.8 \leq$ tWc/tWs $\leq 30.0$.

According to the present disclosure, a battery is provided, which includes the aforementioned anode.

When a maximum among a discharge volumetric capacity of a first cycle to a discharge volumetric capacity of a twentieth cycle of the battery is VMax, the following condition can be satisfied: 100 mAh/cm$^3$ $\leq$ VMax $\leq$ 800 mAh/cm$^3$. By measuring the maximum capacity of the first twenty cycles, it is favorable for confirming the capacity of the battery after the battery reaches a steady state. Moreover, the following condition can be satisfied: 120 mAh/cm$^3$ $\leq$ VMax $\leq$ 750 mAh/cm$^3$. Moreover, the following condition can be satisfied: 140 mAh/cm$^3$ $\leq$ VMax $\leq$ 720 mAh/cm$^3$. Moreover, the following condition can be satisfied: 160 mAh/cm$^3$ $\leq$ VMax $\leq$ 700 mAh/cm$^3$. Moreover, the following condition can be satisfied: 180 mAh/cm$^3$ $\leq$ VMax $\leq$ 680 mAh/cm$^3$. Moreover, the following condition can be satisfied: 200 mAh/cm$^3$ $\leq$ VMax $\leq$ 650 mAh/cm$^3$.

When a discharge volumetric capacity of a fifth cycle of the battery is V5, and a discharge volumetric capacity of a tenth cycle of the battery is V10, the following condition can be satisfied: $0.85 \leq$ V10/V5. By comparing the capacity difference between the fifth cycle and the short-term cycle times of the battery, it is favorable for determining the durability of the battery. Moreover, the following condition can be satisfied: $0.88 \le V10/V5 \le 1.30$. Moreover, the following condition can be satisfied: $0.90 \le V10/V5 \le 1.25$. Moreover, the following condition can be satisfied: $0.92 \le V10/V5 \le 1.20$. Moreover, the following condition can be satisfied: $0.95 \le V10/V5 \le 1.15$. Moreover, the following condition can be satisfied: $0.98 \le V10/V5 \le 1.10$.

When the discharge volumetric capacity of the fifth cycle of the battery is V5, and a discharge volumetric capacity of a fiftieth cycle of the battery is V50, the following condition can be satisfied: $0.80 \le V50/V5$. By comparing the capacity difference between the fifth cycle and the mid-term cycle times of the battery, it is favorable for determining the durability of the battery. Moreover, the following condition can be satisfied: $0.85 \le V50/V5 \le 1.30$. Moreover, the following condition can be satisfied: $0.88 \le V50/V5 \le 1.25$. Moreover, the following condition can be satisfied: $0.90 \le V50/V5 \le 1.20$. Moreover, the following condition can be satisfied: $0.92 \le V50N5 \le 1.15$. Moreover, the following condition can be satisfied: $0.95 \le V50/V5 \le 1.10$.

When the discharge volumetric capacity of the fifth cycle of the battery is V5, and a discharge volumetric capacity of a one-hundredth cycle of the battery is V100, the following condition can be satisfied: $0.70 \le V100/V5$. By comparing the capacity difference between the fifth cycle and the long-term cycle times of the battery, it is favorable for being taken as the basis for determining the battery life. Moreover, the following condition can be satisfied: $0.75 \le V100/V5 \le 1.35$. Moreover, the following condition can be satisfied: $0.80 \le V100/V5 \le 1.30$. Moreover, the following condition can be satisfied: $0.85 \le V100/V5 \le 1.25$. Moreover, the following condition can be satisfied: $0.90 \le V100/V5 \le 1.20$. Moreover, the following condition can be satisfied: $0.95 \le V100/V5 \le 1.15$.

When a total number of Coulombic efficiency greater than 90% and smaller than 110% in the first twenty cycles of the battery is n90E20, the following condition can be satisfied: $15 \le n90E20 \le 20$. As the Coulombic efficiencies of the early cycle times all reach a high standard, it is favorable for reducing the impact of lithium loss on the capacity retention rate. Moreover, the following condition can be satisfied: $16 \le n90E20 \le 20$. Moreover, the following condition can be satisfied: $17 \le n90E20 \le 20$. Moreover, the following condition can be satisfied: $18 \le n90E20 \le 20$. Moreover, the following condition can be satisfied: $19 \le n90E20 \le 20$. Moreover, the following condition can be satisfied: $n90E20 = 20$.

According to the present disclosure, the composition can include the core-shell structure and an auxiliary material.

According to the present disclosure, the core-shell structure can include the core material and the shell material. The main portion of the shell material is farther away from the center of the core-shell structure than the core material, which can also be the shell material surrounds around the core material. If the particle surface of the core material includes a porous structure, part of the shell material can also be located in the porous structure of the particle surface. The aforementioned main portion can represent over 50 percentage of all the shell material.

According to the present disclosure, the core material can be the structural element oxide, the carbon active material or the tin alloy, wherein the structural element oxide can include the structural element complex oxide and the structural element mixed oxide.

The structural element complex oxide can include the structural element. The structural element can be a compound formed by at least two elements selected from lithium, titanium, niobium, cobalt, copper, tin, silicon, iron, manganese and nickel, such as lithium-titanium complex oxide, niobium-titanium complex oxide, or tin-based complex oxide. For further explanation, the structural element complex oxide can include a compound formed by at least three of the structural element.

The structural element mixed oxide can include the structural element. The structural element can be selected from lithium, titanium, niobium, cobalt, copper, tin, silicon, iron, manganese and nickel. For further explanation, the structural element mixed oxide can be a compound formed by at least two oxides including the structural element, such as a mixture of tin oxide and nickel oxide, a mixture of tin oxide and titanium oxide, a mixture of tin oxide and cobalt oxide, a mixture of tin oxide and manganese oxide, a mixture of silicon oxide and lithium oxide, a mixture of silicon oxide and titanium oxide, a mixture of silicon oxide and tin oxide, or a mixture of silicon oxide and iron oxide. For further explanation, the structural element mixed oxide can be a compound formed by at least three oxides including the structural element.

According to the present disclosure, the carbon active material can be graphite, graphene, carbon microbeads, hard carbon or soft carbon.

According to the present disclosure, the shell material can be the mixed material. The mixed material can include the modified silicon material and the carbon material, wherein the modified silicon material can include the silicon material and the auxiliary material.

According to the present disclosure, the formation of the core-shell structure can be achieved by adding the core material and the shell material into the solvent to form a colloidal solution. Through the different electrical properties of the core material and the shell material, the core material and the shell material can attract each other in the solution. Also, through the particle diameter of the core material being larger than the particle diameter of the shell material, the shell material can be tightly distributed around the core material to form the core-shell structure. For further explanation, the electrical properties and electricity of the core material or the shell material can be changed by adjusting the electrolyte added into the solution, the pH value of the solution, etc. The core material can be positively charged and the shell material can be negatively charged to attract each other, or the core material can be negatively charged and the shell material can be positively charged to attract each other. For further explanation, the shell material can use surface-modified silicon material to make it electrically charged, and attract each other with the core material with different electrical properties. A layer of carbon material can be further covered around the periphery of the core material.

According to the present disclosure, the covering ratio of the silicon material is relative to the core material, which is positively related to the weight ratio of the core-shell structure precursor added until it reaches saturation. When the added proportion of the silicon material increases, the covering ratio of the surface or holes of the core material covered by the silicon material increases, and the thickness of the shell material also increases. The covering ratio can be calculated by the following method: a surface image of the core-shell structure is generated by scanning electron microscopy (SEM) technology. Then, through energy dispersive X-ray (EDX) imaging analysis, the position distribution image of the regional surface elements is obtained. The surface image of the core-shell structure and the position distribution image of the regional surface elements are overlapped, and then the imaging software (such as imaged) is used to analyze the color, brightness and shape differences of the overlapped image. The particle diameter of the core material is set as R ($\mu$m), and the proportion of the area occupied by the silicon material is analyzed within the area of $0.02 \times \pi R^2$ ($\mu m^2$) to obtain the covering ratio of the silicon material relative to the core material. Alternatively, transmission electron microscopy (TEM) technology can be used to produce the surface image of the core-shell structure. Alternatively, the position distribution image of the regional surface elements can be obtained through X-ray photoelectron spectroscopy (XPS) imaging analysis. The standards are as follows. For the core-shell structure, an independent core-shell structure which is completely visible is selected, and the core-shell structure with no obvious defects and the shell material being relatively evenly distributed is selected. The area selected for analysis must include the center of the sphere. The single particle diameter of the core material is calculated as the average of the measured longest side and shortest side. The particle diameter and the covering ratio obtained by this method are both measured and calculated from two-dimensional images.

According to the present disclosure, a ratio of the total number of particles of the shell material and the core material is Np. In theoretical calculation methods, the core material and the shell material are set to be spheres and the total number of particles of the core material is set to be 1. A particle diameter of the core material is R. A particle diameter of the shell material is r. The shell material is distributed on the surface of the core material in a sphere packing way. The surface area of the virtual spherical shell formed by the center of the sphere of the shell material is A. When the shell material is distributed in the sphere packing way, the surface area of an equilateral triangle formed by the centers of the spheres of three adjacent shell material spheres is a. Each equilateral triangle contributes 0.5 the shell material. A covering ratio of the shell material is PC. Np thereof can be calculated by the following formula:

$$A = 4\pi(\frac{R+r}{2})^2 \; ;$$

$$a = \frac{\sqrt{3}}{4}r^2 \; ;$$

and

$$Np = \frac{\text{total number of particles of shell material}}{\text{total number of particles of core material}} = \frac{1}{2} \times \frac{A}{a} \times PC \; ;$$

when R » r, the calculating method can be closer to the actual theoretical value. When the core material is the niobium-titanium complex oxide and the shell material is the silicon material, the total number of particles of the niobium-titanium complex oxide in the core-shell structure is Qtn, and the total number of particles of the silicon material in the core-shell structure is Qs, Np = Qs/Qtn.

According to the present disclosure, the niobium-titanium complex oxide can include a non-doped niobium-titanium complex oxide and a doped niobium-titanium complex oxide. A constitution of the non-doped niobium-titanium complex oxide at least includes a niobium element, a titanium element and an oxygen element. The niobium-titanium complex oxide includes a plurality of compounds, which can be further represented by the following chemical formula:

$$Ti_xNb_yO_z;$$

wherein $z \leq 4x+5y$. For example, it can be $TiNb_2O_7$, $Ti_2Nb_{10}O_{29}$, $TiNb_{14}O_{37}$ and $TiNb_{24}O_{62}$. A crystal structure of the niobium-titanium complex oxide can be a cubic crystal system, a monoclinic crystal system, an orthorhombic crystal system, a $ReO_3$-type lattice or a layered structure. The doped niobium-titanium complex oxide can be at least one compound selected from the aforementioned non-doped niobium-titanium complex oxides which are doped with at least one type of element, and the doped niobium-titanium complex oxide can be further represented by the following chemical formula:

$$Ti_{(x-a)}M1_aNb_{(y-b)}M2_bO_{(z-c)}M3_c;$$

wherein M1, M2 and M3 are the doped elements, $0 \leq a < x$, $0 \leq b < y$, and $0 \leq c < z$. The change of structure can be resulted from adjusting the doped elements or the ratio of the doped elements. At least one type of auxiliary material can be further selected to cover or fill a surface or pores of the niobium-titanium complex oxide.

According to the present disclosure, the lithium-titanium complex oxide can include non-doped lithium-titanium complex oxide and doped lithium-titanium complex oxide. The composition of the non-doped lithium-titanium complex oxide at least includes lithium element, titanium element and oxygen element. The lithium-titanium complex oxide includes a plurality kinds of compounds, such as $Li_4Ti_5O_{12}$, $LiTi_2O_4$, $Li_2Ti_3O_7$ and $Li_2TiO_3$. The doped lithium-titanium complex oxide can be selected from at least one of the aforementioned compounds of the non-doped lithium-titanium complex oxide doped with the at least one doped element, and the structure can be changed by adjusting the doped elements or the ratio of the doped elements. At least one type of auxiliary material can be further selected to cover or fill the surface or holes of the lithium-titanium complex oxide.

According to the present disclosure, the doped element can be any element selected from group IA, group IIA, group IVB, group VB, group VIB, group VIIB, group VIIIB, group IB, group IIB, group IIIA, group IVA, group VA, group VIA and group VIIA, which can be further selected from at least one of Li, B, F, Na, Mg, Al, Si, P, S, Cl, Ca, V, Cr, Mn, Fe, Co, Ni, Cu, Zn, Ga, As, Br, Zr, Mo, Sb, I, Ta, W or Bi. It is favorable for improving the conductivity of the doped niobium-titanium complex oxide by selecting and being doped with the elements of high conductivity or the relatively light elements, and the quick charging performance of the battery can be improved and the energy density can be enhanced.

According to the present disclosure, the tin-based complex oxide can include tin-nickel complex oxide, tin-iron complex oxide, tin-copper complex oxide, tin-titanium complex oxide, tin-niobium complex oxide, tin-cobalt complex oxide, tin-silicon complex oxide, tin-manganese complex oxide or tin-lithium complex oxide.

According to the present disclosure, the tin alloy can include tin-phosphorus alloy, tin-sulfur alloy, tin-antimony alloy, tin-cobalt-sulfur alloy, tin-antimony-sulfur alloy or tin-copper-phosphorus alloy.

According to the present disclosure, the modified silicon material can include the silicon material and the auxiliary material. The silicon material and the auxiliary material can form a mixture. The silicon material and the auxiliary material can also form chemical bonds. The silicon material and the auxiliary material can also form layered structure. For further explanation, the auxiliary material can be selected as the polymer. The polymer can form the layered structure around the periphery of the silicon material by a chemical bonding way or a physical mixing way. The polymer is polymerized from the at least two types of monomers. The at least two types of monomers can include the first monomer and the second monomer. The first monomer includes the siloxane group. The second monomer includes the carboxyl group or the ester group. The first monomer is closer to the silicon material than the second monomer. The polymer can be formed by the covalent bonding of the addition polymerization and copolymerization of the first monomer, which has unsaturated alkenyl group or acrylate group, and the second monomer, which has unsaturated alkenyl group or has unsaturated acrylate group. A crosslinking agent can be further added into the polymer, which makes the linear polymer forms crosslinking structure by bonding and crosslinking with each other.

According to the present disclosure, the silicon material can be silicon, silicon oxide, silicon-carbon composite or silicon alloy. The particle diameter of the silicon material at D50 is sD50, and sD50 can be 20 nm, 50 nm, 80 nm, 100 nm, 150 nm, 200 nm, 250 nm, 300 nm, 350 nm, 400 nm, 450 nm, 500 nm, 800 nm, 1000 nm, 1500 nm, 2000 nm, 2500 nm or 3000 nm.

According to the present disclosure, the first monomer can include at least one of alkenyl group (-C=C-), carbonyl group (-C=O), carboxyl group (-COOH), amide group ($-CONH_2$) or siloxy of silyl enol ether, which includes: ethenyl(trimethoxy)silane, ethenyl (triethoxy)silane, ethenyl-dimethoxy-methylsilane, 2-(chloromethyl)prop-2-enyl-trimethoxysilane, [2-hydroxy-3-[3-[methyl-bis(trimethylsilyloxy)silyl]propoxy]propyl] 2-methylprop-2-enoate, 3-[dimethyl(trimethylsilyloxy)silyl]propyl 2-methylprop-2-enoate, 3-[methyl-bis(trimethylsilyloxy)silyl]propyl 2-methylprop-2-enoate, N-prop-2-enyl-3-trimethoxysilylpropan-1-amine, (3-isocyanatopropyl)-triethoxysilane, 1-[3-(trimethoxysilyl)propyl]urea, and vinylmethylsiloxane-dimethylsiloxane silanol terminated copolymer. The siloxy compound can further be but not limited to the following structure:

$$(R)_3\text{-Si-}(CH_2)_n\text{-X-}(CH_2)_m\text{-A,}$$

wherein R is selected from a group consisting of methoxy group, ethoxy group and siloxy group, X is methyl group or oxygen, A is selected from a group consisting of ethenyl group, acrylate group and methacrylate group, and n and m satisfy the following condition: $0 \leq n+m \leq 10$. The siloxy compound can include: triethoxysilylmethyl 2-methylprop-2-enoate, 2-trimethylsilyloxyethyl 2-methylprop-2-enoate, 3-trimethoxysilylpropyl 2-methylprop-2-enoate (MPS), 4-trimethoxysilylbutyl 2-methylprop-2-enoate, 5-trimethoxysilylpentyl 2-methylprop-2-enoate, 6-trimethoxysilylhexyl 2-methylprop-2-enoate, 7-trimethoxysilylheptyl 2-methylprop-2-enoate, 8-trimethoxysilyloctyl 2-methylprop-2-enoate, 9-trimethoxysilylnonyl 2-methylprop-2-enoate, 10-trimethoxysilyldecyl 2-methylprop-2-enoate, tris(trimethylsilyloxy)silylmethyl 2-methylprop-2-enoate, and 3-tris(trimethylsilyloxy)silylpropyl 2-methylprop-2-enoate. Silanol group (Si-OH) with activity can be formed by the hydrolysis reaction of the siloxy compound and perform a condensation reaction with the silicon material, especially forming the silicon oxide on the surface by the oxidant. Thus, the siloxane with the structure of Si-O-Si can be formed. The Si-H bond on the surface of the silicon material can be oxidized into silanol group (Si-OH), or the silicon can be oxidized into silicon dioxide by the oxidant, which is favorable for forming the oxidizing layer at the surface of the silicon material.

According to the present disclosure, the second monomer can include the carboxyl group or the ester group, such as 2-(dimethylamino)ethyl 2-methylprop-2- enoate (DMAEMA), methyl 2-methylprop-2-enoate (MMA), methyl prop-2-enoate (MA), 2-ethylhexyl prop-2-enoate (2EHA), prop-2-enoic acid (AA), 2-methylpropyl 2-methylprop-2-enoate (IBMA), benzyl 2-methylprop-2-enoate (BZMA), oxolan-2-ylmethyl prop-2-enoate (THFA), 2-(2-ethoxyethoxy)ethyl prop-2-enoate (EDGA), dodecyl prop-2-enoate (LA) or a combination of the aforementioned monomers.

According to the present disclosure, the crosslinking agent can help the linear polymers crosslinks and bonds with each other to form a network structure. The crosslinking agent can be any terminally ethylenically unsaturated compound, which can include: 2,2',2",2'''-(ethane-1,2-diyldinitrilo) tetraacetic acid (EDTA), ethoxylated-9 trimethylolpropane triacrylate (TMP9EOTA), 2-(2-methylprop-2-enoyloxy)ethyl 2-methylprop-2-enoate, 2-[2-(2-methylprop-2-enoyloxy)ethoxy]ethyl 2-methylprop-2-enoate, 2-[2-[2-(2-methylprop-2-enoyloxy)ethoxy]ethoxy]ethyl 2-methylprop-2-enoate, 2-[2-[2-[2-(2-methylprop-2-enoyloxy)ethoxy]ethoxy]ethoxylethyl 2-methylprop-2-enoate, prop-2-enyl 2-methylprop-2-enoate, 3-(2-methylprop-2-enoyloxy)propyl 2-methylprop-2-enoate, [2-methyl-3-(2-methylprop-2-enoyloxy)propyl] 2-methylprop-2-enoate, 4-(2-methylprop-2-enoyloxy)butyl 2-methylprop-2-enoate, and 6-(2-methylprop-2- enoyloxy)hexyl 2-methylprop-2-enoate.

According to the present disclosure, the silicon-carbon composite can include a layered structure of silicon surrounded by carbon shell, a silicon-carbon yolk-shell structure and a porous structure. The layered structure of silicon surrounded by carbon shell is to cover the carbon shell around the silicon material by pyrolysis in the absence of oxygen. The silicon-carbon yolk-shell structure is to generate silicon oxide on the surface of silicon, and cover a layer of carbon shell around the silicon material by pyrolysis in the absence of oxygen. Then, silicon oxide is removed by hydrofluoric acid (HF) to make silicon particles break into tiny nano-particles. The porous structure is manufactured by the materials with low self-diffusion coefficients or adding foaming materials and through sintering or electrochemical corrosion, so as to carbonize the intermediate product to form a silicon carbide ceramic porous material.

According to the present disclosure, the carbon material can be formed by carbonizing the carbon-containing precursor through heat treatment. The carbon-containing precursor can include organic compounds, and the organic compounds can further include carbohydrates, asphalts or an organic polymer.

According to the present disclosure, the carbon conductive material can be graphite, carbon microbeads, carbon fibers, hard carbon, soft carbon, KS6, SFG6, graphene, acetylene black, ketjenblack, carbon black, Super P or carbon nanotube (CNT).

According to the present disclosure, the auxiliary material can include polymers, metals, alloys, non-metal oxides, metal oxides, fluorides, organic compounds, adhesives, conductive agents or additives.

According to the present disclosure, the niobium-titanium complex oxide is represented by TNO, 3-trimethoxysilylpropyl 2-methylprop-2-enoate is represented by MPS, 2-(dimethylamino)ethyl 2-methylprop-2- enoate is represented by DMAEMA, prop-2-enoic acid is represented by AA, methyl 2-methylprop-2-enoate is represented by MMA, methyl prop-2-enoate is represented by MA, 2-ethylhexyl prop-2-enoate is represented by 2EHA. According to the present disclosure, all the related configurations of the core material and the shell material in the composition can be further made into the core-shell structure, the electrode piece and the battery for charging and discharging tests according to the correlated ratios. According to the present disclosure, only part of the related configurations is shown, and it is marked as "-" in the tables when there is no data or it cannot be calculated.

According to the present disclosure, the adhesive can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethylene rubber (CSM) or alginic acid made of mono alduronic acid by linear polymerization.

According to the present disclosure, the conductive agent can be graphite, KS6, SFG6, graphene, acetylene black, ketjenblack, carbon black, super P, carbon nanotube (CNT), carbon microbeads, carbon fibers, hard carbon, soft carbon, aluminium, nickel, titanium dioxide, potassium hexatitanate (PHT) or the combination thereof.

According to the present disclosure, the additives can be carbonate ester compounds, lactone cyclic esters, cyclic compounds with ether groups, aromatic compounds, phosphorus compounds, boron compounds, inorganic oxides or the combination thereof. It is favorable for improving the efficacy of the battery by adding proper amount of additives. For example, the SEI membrane composition is improved, the efficacy under high temperature and high voltage is enhanced, the ion transportation ability is enhanced, the impedance of the electrolyte is reduced, the stability of cycles is improved, the integrity of the cathode and anode materials is maintained, and the electrochemical stability is enhanced.

According to the present disclosure, the anode material can include the core-shell structure, the auxiliary material, compounds including lithium metal, oxides including lithium metal, lithium metal or the combination thereof.

According to the present disclosure, the metal salts can include lithium inorganic acid salts, such as $LiPF_6$, $LiBF_4$, $LiSbF_6$, $LiAsF_6$, $LiClO_4$, $LiC_4BO_8$, LiTFSI, LiFSI, $LiNO_3$ or $LiGaCl_4$; lithium sulfonate salts with fluorine, such as $LiCF_3SO_3$, $LiN(C_2F_5SO_2)_2$, $LiN(CF_3SO_2)_2$ or $LiC(CF_3SO_2)_3$; $LiBF_2(C_2O_4)$ (LiDFOB), $LiB(C_2O_4)_2$ (LiBOB) or the combination thereof. The aforementioned metal salts can have various oxidation states.

According to the present disclosure, the cathode material can include lithium or a lithium complex metal oxide with at least one metal, such as $LiFePO_4$, $LiMnO_2$, $LiMn_2O_4$, $LiCoO_2$, $LiNiO_2$, $LiNiCoO_2$, $LiNiMnO_4$, $LiCoMnO_2$, $LiCoMnO_4$, $LiNiCoMnO_2$, $LiNiCoMnO_4$ or the combination thereof. The aforementioned lithium complex metal oxide can have various oxidation states.

According to the present disclosure, the electrolyte can be combinations of metal salts, additives and organic solvents. The composition ratio of the organic solvents can be larger than the composition ratio of the additives. The condition of the electrolyte can be liquid, gel or solid. The additives and the organic solvents of the electrolyte can be physically mixed, or at least one of the following additives and the organic solvent monomers can be selected as a precursor for polymerization.

According to the present disclosure, the organic solvents can be carbonate esters, carboxylate esters, ethers, sulfides or the combination thereof. The aforementioned organic solvents can also be used as the additives.

According to the present disclosure, the structure of the organic solvents can include polymerizable olefin groups, which can be the monomers of the precursor of the second structure. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene-1,1-dioxide, 1-ethenylsulfonylethene, prop-1-ene-1,3-sultone, cyclic additives with ether groups or additives of aromatic compounds.

According to the present disclosure, the organic solvents of the carbonate esters can be a compound in which the hydrogen atoms of the hydroxyl group in the carbonic acid are partially or wholly substituted by alkyl groups. It can be divided into the cyclic carbonate esters and the linear carbonate esters. The linear carbonate esters can include: dimethyl carbonate (DMC), diethyl carbonate (DEC), dipropyl carbonate (DPC), ethyl methyl carbonate (EMC), methyl propyl carbonate (MPC), ethyl propyl carbonate (EPC), methyl 2,2,2-trifluoroethyl carbonate (FEMC). The cyclic carbonate esters can include: 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate) or the combination thereof.

According to the present disclosure, the organic solvents of the carboxylate esters can be manufactured by the esterification of alcohols and carboxyl acids. It can be methyl acetate, ethyl acetate, propyl acetate, methyl propionate, ethyl propionate, propyl propionate, methyl butyrate, ethyl butyrate, lactone or the combination thereof. The lactone can further include 1-oxacycloalkan-2-one structure, which means a compound having hydroxyl groups and carboxyl acids, and the monomers of cyclic carboxylate esters are formed by the intramolecular condensation. There can be various combinations according to the positions of the hydroxyl groups for forming a ring and the number of carbon atoms in the ring, which can include: oxiran-2-one (α-acetolactone), oxetan-2-one (β-propiolactone), oxolan-2-one (γ-butyrolactone), 5-methyloxolan-2-one (γ-valerolactone}, oxan-2-one (σ-valerolactone), 5-ethyloxolan-2-one (γ-caproiactone), oxepan-2-one (ε-caprolactone), D-glucono-1,5-lactone (δ-gluconofactone) or the combination thereof.

According to the present disclosure, the organic solvents of the ethers can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG) or the combination thereof.

According to the present disclosure, the organic solvents of the sulfides can be compounds with sulfone group (-(O=)S(=O)-) or compounds with sulfonate group (-$SO_2$O-). The compounds with sulfone group can include: 2,5-dihydrothiophene-1,1-dioxide, 1-ethenylsulfonylethene. The compounds with sulfonate group can be divided into

mesylate (CH$_3$SO$_2$O$^-$), trifluoromethanesulfonate (CF$_3$SO$_2$O$^-$), p-toluenesulfonyl group (Tosyl), which can include 1-methylsulfonyloxyethane, methyl 4-methylbenzenesulfonate, oxathiolane 2,2-dione, prop-1-ene-1,3-sultone, 1,3,2-dioxathiane 2,2-dioxide or the combination thereof.

According to the present disclosure, the lactone cyclic ester can be two compounds, which are the same as or different from each other, both include hydroxy acid, and form polycyclic diester monomers by esterification condensation. It can include: 1,4-dioxane-2,5-dione (glycolide), 3,6-dimethyl-1,4-dioxane-2,5-dione (lactide) or the combination thereof. According to the stereoisomerisms formed from different orientations of the atoms in the space, the 3,6-dimethyl-1,4-dioxane-2,5-dione can be further divided into (R,R)-3,6-dimethyl-1,4-dioxane-2,5-dione (LL-lactide), (S,S)-3,6-dimethyl-1,4-dioxane-2,5-dione (DD-lactide), or (meso)-3,6-dimethyl-1,4-dioxane-2,5-dione (DL-lactide). Moreover, it can be a carboxylic acid compound with hydroxyl group, which can directly form the polymer by copolymerization without ring-opening reaction. It can include: 2-hydroxyacetic acid (glycolic acid), 3-hydroxypropanoic acid (lactic acid), 4-hydroxybutanoic acid, 5-hydroxyvaleric acid or the combination thereof.

According to the present disclosure, the additives of the cyclic compounds with ether groups can be crown ether. The crown ether has vinyloxy groups (-CH$_2$CH$_2$O-) as the main repeating unit, which can include: 1,4,7-trioxonane (9-crown-3), 1,4,7,10-tetraoxacyclododecane (12-crown-4), 1,4,7,10,13-pentaoxacyclopentadecane (15-crown-5), 1,4,7,10,13,16-hexaoxacyclooctadecane (18-crown-6), 1,4,7,10,13,16,19-heptaoxacycloheneicosane (21-crown-7), 6,7,9,10,17,18,20,21-octahydrodibenzo[b,k][1,4,7,10,13,16]hexaoxacyclooctadecine (dibenzo-18-crown-6), 1,4,10,13-tetraoxa-7,16-diazacyclooctadecane (diaza-18-crown-6) or the combination thereof.

According to the present disclosure, the additives of the aromatic compounds can include methoxybenzene, 1-ethynyl-4-methoxybenzene, tert-butylbenzene, fluorobenzene, 1,2-difluorobenzene, 1,1'-oxydibenzene, 1,4-diphenyl benzene, 2-fluoro-4-(2-methyl-2-propanyl)aniline, N-[3-(trimethoxysilyl)propyl]aniline or the combination thereof.

According to the present disclosure, the additives of the phosphorus compounds can be tris(trimethylsilyl) phosphite (TMSPi), tris(2,2,2-trifluoroethyl) phosphite, triphenyl phosphite, 1,3,5,2,4,6-triazatriphosphorine-2-ethoxy-2,4,4,6,6-pentafluoro-2,2,4,4,6,6-hexahydro or the combination thereof.

According to the present disclosure, the additives of the boron compounds can be trimethyl borate, tris(trimethylsilyl) borate, 2,4,6-trimethyl-1,3,5,2,4,6-trioxatriborinane or the combination thereof.

According to the present disclosure, the additives of the inorganic oxides can be complex materials such as LiLaZrO, LiLaZrTaO, LiLaTiO, LiPO, LiPOF, LiTiPO, LiAlGeP, LiAlTiPO, LiGePSO, LiSnPSO, PbZrTiO, PbLaZrTiO, or BaTiO. The aforementioned additives of the inorganic oxides can have various oxidation states, or can be Al$_2$O$_3$, TiO$_2$, SiO$_2$, SnO$_2$, NiO, ZnO, CaO, MgO, ZrO$_2$, CeO$_2$, Y$_2$O$_3$, etc. The crystallinity of the polymer electrolyte can be reduced, and the ion conductivity and the physical mechanical strength of the electrolyte can be enhanced, which is favorable for increasing the cycle life of the battery.

According to the present disclosure, the separator can be a thin film with porous structure, and can include a single layer or multiple layers of fibers of polyolefins, polyamides, polyesters, such as polyethylene (PE), polypropylene (PP), polyethylene terephthalate (PET), acrylonitrile butadiene styrene copolymer (ABS) or epoxy resin. The surface thereof can include an inorganic ceramic composite film of at least one of Mg(OH)$_2$, MgO, BaSO$_4$, SnO$_2$, NiO, CaO, Al$_2$O$_3$, ZnO, SiO$_2$, TiO$_2$ or the combination thereof. The aforementioned inorganic ceramic composite film can have various oxidation states.

According to the weight ratio of the anode of the present disclosure, the weight of the anode calculated herein does not include the weight of the current collector.

According to the present disclosure, the cycles of the battery are defined as the battery is in a condition of a commercial product, and the first test under the aforementioned condition is taken as the first cycle of the present disclosure. One complete discharging and charging test is taken as one cycle, and the number of the cycles is accumulated accordingly.

According to the present disclosure, the capacity can be obtained by measuring the charging capacity of the battery and the discharging capacity of the battery. The methods for calculating the capacity can be divided into the volumetric capacity (mAh/cm$^3$) and the gravimetric capacity (mAh/g). The volumetric capacity means the capacity provided by the electrode piece per cubic centimeter in a battery, and the volume of the current collector should be deducted as calculating the volumetric capacity. The gravimetric capacity means the capacity provided by the electrode piece per gram in a battery, and the weight of the current collector should be deducted as calculating the gravimetric capacity. The electrode piece can be the cathode piece or the anode piece.

According to the present disclosure, the current collector can be a metal foil or a substrate made by a conductive polymer. The metal foil can be selected from aluminum, copper, titanium, nickel, tantalum, stainless steel or an alloy made by the aforementioned metals.

According to the present disclosure, the C-rate (C) can represent the current of the battery being fully discharged for one hour. C can be the unit of the charging and discharging current of the battery.

According to the present disclosure, the voltage range to measure the battery can be chosen according to the redox potential of the materials of the cathode and anode to obtain a relatively proper voltage range. The voltage range can be chosen as 0 V - 5.0 V. Preferably, it can be chosen as 0 V - 3.0 V. Preferably, it can be chosen as 1.0 V - 4.5 V. Preferably, it can be chosen as 2.5 V - 4.5 V.

According to the present disclosure, the discharge volumetric capacity can be represent as CiVj, and the discharge gravimetric capacity can be represent as CiGj, wherein i represents the current for charging and discharging in the unit of C, and j represents the number of cycle of charging and discharging of the battery.

According to the present disclosure, the total number of Coulombic efficiency satisfying a certain percentage range can be represented as nxCyEz, wherein x represents the lower limit of the certain percentage range, y represents the current for charging and discharging in the unit of C, and z represents the stopped number of cycle of charging and discharging of the battery.

According to the present disclosure, the average of Coulombic efficiencies can be represented as aCyEz, wherein y represents the current for charging and discharging in the unit of C, and z represents the stopped number of cycle of charging and discharging of the battery.

According to the present disclosure, the diameter of particles and the diameter distribution thereof can be obtained by measuring the amplitude corresponding to the time of the scattering light from the particles undergoing Brownian motion by dynamic light scattering. The diameter of particles can be calculated by the Stokes-Einstein equation, which is shown as follows:

$$D = kT/(3\pi\eta Df);$$

wherein D is the diameter of the particles (its unit is m), k is Boltzmann constant (its unit is J/K), T is the absolute temperature (its unit is K), $\eta$ is the viscosity of the solvent (its unit is $kg \times m^{-1} \times s^{-1}$), and Df is the diffusion coefficient (its unit is $m^2 \times s^{-1}$).

According to the present disclosure, the diameter distribution is the distribution of diameter of the particles with different sizes in the samples to be tested. According to the ratio of the distribution of each diameter and the accumulated percentage based on volume, the function of cumulative particle size distribution can be obtained. For example: a diameter as the percentage of cumulative particle size distribution reaching 50% is D50, which represents that there are 50% particles in the sample to be tested having the diameter less than the diameter of D50. D10, D90 have the similar definitions. D50 is the standard of estimating the particle diameter if there is no special indication.

According to the present disclosure, the diameter of the core can be measured from analyzing the diffraction peak {111} of the silicon crystal grain by the X-ray diffractometer according to the Scherrer equation:

$$L = (\kappa \times \lambda)/(\beta\cos(\theta/2));$$

wherein L is the diameter of the silicon crystal grain (its unit is nm); $\kappa$ is the shape factor, which is about 0.9 but changes depending on the actual shape of the crystal grain; $\beta$ is the full width at half maximum of the diffraction peak {111} (its unit is radian); and $\theta$ is the position of the diffraction peak {111}.

According to the present disclosure, the anode piece can be manufactured by the methods of coating on single layer or double layers, vacuum coating or composite structures.

According to the present disclosure, the roughness is an arithmetical mean height of the surface of the surface characteristic parameter Sa ($\mu$m) according to ISO 251781. The region for measuring the roughness is set for an area being at least larger than 10000 $\mu m^2$. The average height of the surface is the arithmetical mean of the height of each point Z(x,y) in the region. Sa is the average value of the absolute values of the difference between each point Z(x,y) in the region and the average height of the surface according to the following equation:

$$Sa = \frac{1}{A} \iint_A |Z(x,y) - h| \, dx \, dy \quad ;$$

wherein A is the area of the region ($\mu m^2$), and h is the average height of the surface ($\mu$m).

According to the present disclosure, the conductivity is measured by the electrochemical impedance spectroscopy (EIS) method. An alternating current of 1 Hz to 100 Hz and the amplitude of 50 mV is applied to the polymer or the electrolyte. The resistance value is measured, and the conductivity is calculated by the following equation:

$$Ci = (1/R) \times (L/A);$$

wherein Ci ($S \times cm^{-1}$) is the conductivity, R ($\Omega$) is the resistance value, L (cm) is the distance between two electrodes, and A

(cm$^2$) is the sectional area of the sample to be tested and the electrodes, wherein (L/A) can be defined as the conductivity parameter (cm$^{-1}$).

According to the present disclosure, the electrochemical stability is measured by linear sweep voltammetry (LSV). The scanning speed is 0.1 V/s and it is repeatedly tested under the condition of the Li/Li$^+$ relative voltage between -5 V to 5 V, and the results of the relationship changes between the current and potential corresponding thereto can be obtained.

According to the present disclosure, the battery assembly can include a battery case, a spring, a spacer, a lid, a tab, a cap.

According to the present disclosure, the bipolar battery can include the electrode pieces of the bipolar battery and electrolyte. The electrode pieces of the bipolar battery is a cathode at one side, which includes cathode materials, and an anode at the other side, which includes anode materials. The two electrode pieces of the bipolar battery are connected through the electrolyte (the electrolyte contacts the cathode of one bipolar battery electrode piece and the anode of the other bipolar battery electrode piece) to form the bipolar battery unit, and a plurality of the bipolar battery units are connected in series to form the bipolar battery.

According to the present disclosure, the battery can be a primary cell or a secondary cell. The electrochemical carrier of the primary cell or the secondary cell can be at least one of a button type carrier, a winding type carrier or a stacking type carrier. It can be applied to the portable electronic products, such as digital cameras, mobile phones, notebook computers, console handles and other devices which need to be light and thin, or applied to the power storage industries with large-scale, such as light electric cars and electric cars.

According to the above description of the present disclosure, the following specific embodiments are provided for further explanation.

<Comparative Embodiment>

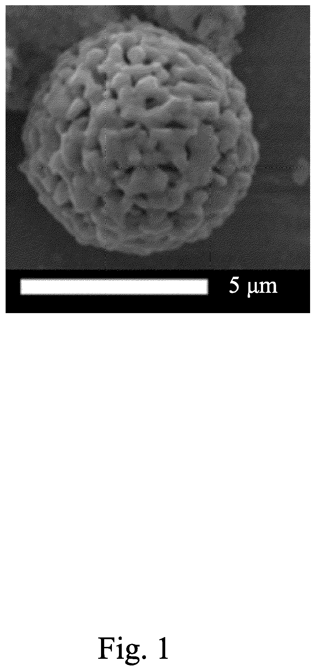

Fig. 1 is a scanning electron microscopy image of a core-shell structure surface of the battery according to the comparative embodiment. The comparative embodiment is a battery. An anode thereof includes a composition. The composition includes the core-shell structure. The core-shell structure includes a core material and a shell material. The shell material is farther away from a center of the core-shell structure than the core material.

According to the battery of the comparative embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 9278.1 nm; and Dtn = 6345.6 nm.

According to the battery of the comparative embodiment, the shell material includes a silicon material. When a particle diameter of the silicon material at D50 is sD50, and a covering ratio of the silicon material relative to the core material is PCs, the following conditions are satisfied: sD50 = 80.0 nm; and PCs = 0%.

According to the battery of the comparative embodiment, when the particle diameter of the niobium-titanium complex oxide is Dtn, and the particle diameter of the silicon material at D50 is sD50, the following condition is satisfied: Dtn/sD50 = 79.3.

According to the battery of the comparative embodiment, when a weight of the core material in the anode is tWc, and a weight of the silicon material in the anode is tWs, the following conditions are satisfied: tWc = 1.00; tWs = 0.05; and tWc/tWs = 20.0.

The detailed data of the battery of the comparative embodiment are shown in Table 1 below.

<1st Embodiment>

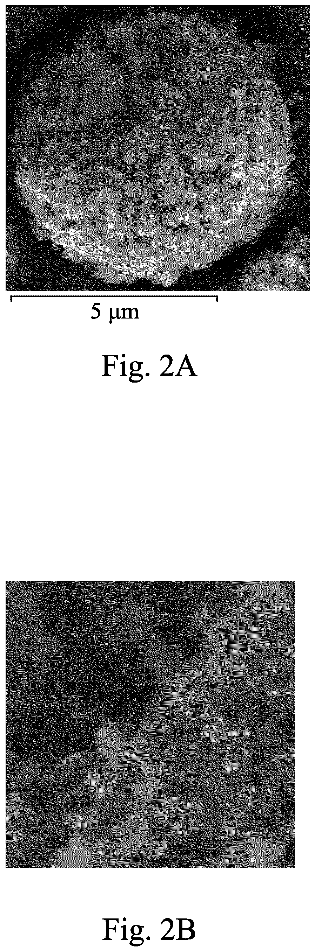

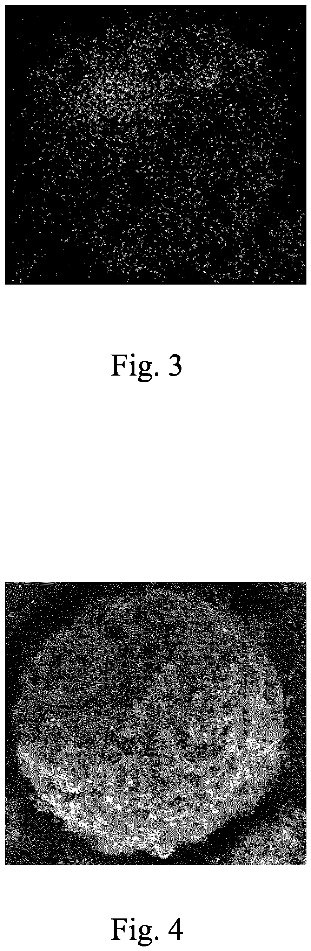

Fig. 2A is a scanning electron microscopy image of a core-shell structure surface of the battery according to the 1st embodiment. Fig. 2B is a scanning electron microscopy image of the core-shell structure surface in an area of $0.02 \times \pi R^2$ μm$^2$ according to the 1st embodiment. Fig. 3 is an element distribution image of the core-shell structure surface according to the 1st embodiment. Fig. 4 is an overlapping result of the scanning electron microscopy image and the element distribution image of the core-shell structure surface according to the 1st embodiment. The 1st embodiment is a battery. An anode thereof includes a composition. The composition includes the core-shell structure. The core-shell structure includes a core material and a shell material. The shell material is farther away from a center of the core-shell structure than the core material.

According to the battery of the 1st embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 9278.1 nm; and Dtn = 6957.3 nm.

According to the battery of the 1st embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 27.0%.

According to the battery of the 1st embodiment, the polymer is polymerized from at least two types of monomers. The at least two types of monomers include a first monomer and a second monomer. The first monomer is MPS, and the second monomer is DMAEMA.

According to the battery of the 1st embodiment, when the particle diameter of the core material at D50 is cD50, and the particle diameter of the silicon material at D50 is sD50, the following condition is satisfied: cD50/sD50 = 116.0.

According to the battery of the 1st embodiment, when the particle diameter of the niobium-titanium complex oxide is Dtn, and the particle diameter of the silicon material at D50 is sD50, the following condition is satisfied: Dtn/sD50 = 87.0.

According to the battery of the 1st embodiment, when a total number of particles of the niobium-titanium complex oxide in the core-shell structure is Qtn, and a total number of particles of the silicon material in the core-shell structure is Qs, the following condition is satisfied: Log(Qs/Qtn) = 3.9.

According to the battery of the 1st embodiment, when a weight of the niobium-titanium complex oxide relative to the core-shell structure is Wtn, and a weight of the silicon material relative to the core-shell structure is Ws, the following condition is satisfied: Wtn/Ws = 148.7.

According to the battery of the 1st embodiment, when a weight of the core material in the anode is tWc, and a weight of the silicon material in the anode is tWs, the following conditions are satisfied: tWc = 9.00; tWs = 1.00; and tWc/tWs = 9.0.

The detailed data of the battery of the 1st embodiment are shown in Table 1 below.

<2nd Embodiment>

The 2nd embodiment is a battery. An anode thereof includes a composition. The composition includes a core-shell structure. The core-shell structure includes a core material and a shell material. The shell material is farther away from a center of the core-shell structure than the core material.

According to the battery of the 2nd embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 9278.1 nm; and Dtn = 7958.7 nm.

According to the battery of the 2nd embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 50.7%.

According to the battery of the 2nd embodiment, the polymer is polymerized from at least two types of monomers. The at least two types of monomers include a first monomer and a second monomer. The first monomer is MPS, and the second monomer is DMAEMA.

The detailed data of the battery of the 2nd embodiment are shown in Table 1 below. The definitions of these parameters shown in Table 1 are the same as those stated in the 1st embodiment with corresponding values for the 2nd embodiment, so an explanation in this regard will not be provided here again.

| Table 1 - Batteries of Comparative Embodiment, 1st Embodiment and 2nd Embodiment | | | | | Comparative Embodiment | 1st Embodiment | 2nd Embodiment |
|---|---|---|---|---|---|---|---|
| Core-Shell Structure | Core | Material | | | Structural Element Oxide | Structural Element Oxide | Structural Element Oxide |
| | | | | | TNO | TNO | TNO |
| | | Particle Diameter of D50 (nm) | cD50 | | 9278.1 | 9278.1 | 9278.1 |
| | | Single Particle Diameter of TNO (nm) | Dtn | | 6345.6 | 6957.3 | 7958.7 |
| | Shell | Mixed Material | Material 1 | | Silicon Material | Silicon Material | Silicon Material |
| | | | Particle Diameter of D50 (nm) | sD50 | 80.0 | 80.0 | 80.0 |
| | | | Material 2 | First Monomer | - | MPS | MPS |
| | | | | Second Monomer | - | DMAEMA | DMAEMA |
| | | Covering Ratio of Silicon Material (%) | PCs | | 0 | 27.0 | 50.7 |
| | Particle Diameter Ratio | Core Material /Silicon Material | cD50 /sD50 | | - | 116.0 | 116.0 |
| | | TNO /Silicon Material | Dtn /sD50 | | 79.3 | 87.0 | 99.5 |
| | Total Number Ratio of Particles | TNO /Silicon Material | Log(Qs /Qtn) | | - | 3.9 | 4.3 |
| | Weight Ratio | TNO /Silicon Material | Wtn /Ws | | - | 148.7 | 91.0 |
| Anode | Weight of Core Material | | tWc | | 1.00 | 9.00 | 1.00 |
| | Weight of Silicon Material | | tWs | | 0.05 | 1.00 | 1.00 |
| | tWc/tWs | | | | 20.0 | 9.0 | 1.0 |
| Battery | Temperature | | | | - | - | - |
| | C-rate | | | | - | - | - |
| | Discharge Volumetric Capacity (mAh/cm³) | V1 | Discharge | | - | - | - |
| | | | Charge | | - | - | - |
| | | V5 | Discharge | | - | - | - |
| | | | Charge | | - | - | - |

| | | | | | | |
|---|---|---|---|---|---|---|
| | | V10 | Discharge | - | - | - |
| | | | Charge | - | - | - |
| | | V50 | Discharge | - | - | - |
| | | | Charge | - | - | - |
| | | V100 | Discharge | - | - | - |
| | | | Charge | - | - | - |
| | Maximum among Discharge Volumetric Capacities of First Cycle to Twentieth Cycle | VMax | | - | - | - |
| | Discharge Volumetric Capacity of Tenth Cycle/Discharge Volumetric Capacity of Fifth Cycle | V10/V5 | | - | - | - |
| | Discharge Volumetric Capacity of Fiftieth Cycle/Discharge Volumetric Capacity of Fifth Cycle | V50/V5 | | - | - | - |
| | Discharge Volumetric Capacity of One-Hundredth Cycle/Discharge Volumetric Capacity of Fifth Cycle | V100/V5 | | - | - | - |
| | Total Number of Coulombic Efficiency Greater than 90% and Smaller than 110% in First Twenty Cycles | n90E20 | | - | - | - |

<3rd Embodiment>

The 3rd embodiment is a battery. An anode thereof includes a composition. The composition includes a core-shell structure. The core-shell structure includes a core material and a shell material. The shell material is farther away from a center of the core-shell structure than the core material.

According to the battery of the 3rd embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 13085.2 nm; and Dtn = 15688.6 nm.

According to the battery of the 3rd embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 86.8%.

According to the battery of the 3rd embodiment, the polymer is polymerized from at least two types of monomers. The at least two types of monomers include a first monomer and a second monomer. The first monomer is MPS, and the second monomer is DMAEMA.

The detailed data of the battery of the 3rd embodiment are shown in Table 2 below. The definitions of these parameters shown in Table 2 are the same as those stated in the 1st embodiment with corresponding values for the 3rd embodiment, so an explanation in this regard will not be provided here again.

<4th Embodiment>

The 4th embodiment is a battery. An anode thereof includes a composition. The composition includes a core-shell structure. The core-shell structure includes a core material and a shell material. The shell material is farther away from a center of the core-shell structure than the core material.

According to the battery of the 4th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 16011.6 nm; and Dtn = 13490.2 nm.

According to the battery of the 4th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 81.1%.

According to the battery of the 4th embodiment, the polymer is polymerized from at least two types of monomers. The at least two types of monomers include a first monomer and a second monomer. The first monomer is MPS, and the second monomer is DMAEMA.

The detailed data of the battery of the 4th embodiment are shown in Table 2 below. The definitions of these parameters shown in Table 2 are the same as those stated in the 1st embodiment with corresponding values for the 4th embodiment, so an explanation in this regard will not be provided here again.

<5th Embodiment

The 5th embodiment is a battery. An anode thereof includes a composition. The composition includes a core-shell structure. The core-shell structure includes a core material and a shell material. The shell material is farther away from a center of the core-shell structure than the core material.

According to the battery of the 5th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 10749.6 nm; and Dtn = 18914.9 nm.

According to the battery of the 5th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 58.2%.

According to the battery of the 5th embodiment, the polymer is polymerized from at least two types of monomers. The at least two types of monomers include a first monomer and a second monomer. The first monomer is MPS, and the second monomer is DMAEMA.

The detailed data of the battery of the 5th embodiment are shown in Table 2 below. The definitions of these parameters shown in Table 2 are the same as those stated in the 1st embodiment with corresponding values for the 5th embodiment, so an explanation in this regard will not be provided here again.

| Table 2 - Batteries of 3rd Embodiment, 4th Embodiment and 5th Embodiment | | | | 3rd Embodiment | 4th Embodiment | 5th Embodiment |
|---|---|---|---|---|---|---|
| Core-Shell Structure | Core | Material | | Structural Element Oxide | Structural Element Oxide | Structural Element Oxide |
| | | | | TNO | TNO | TNO |
| | | Particle Diameter of D50 (nm) | cD50 | 13085.2 | 16011.6 | 10749.6 |
| | | Single Particle Diameter of TNO (nm) | Dtn | 15688.6 | 13490.2 | 18914.9 |

| | | | | Material 1 | Silicon Material | Silicon Material | Silicon Material |
|---|---|---|---|---|---|---|---|
| Shell | Mixed Material | | Particle Diameter of D50 (nm) | sD50 | 80.0 | 80.0 | 80.0 |
| | | Material 2 | First Monomer | | MPS | MPS | MPS |
| | | | Second Monomer | | DMAEMA | DMAEMA | DMAEMA |
| | Covering Ratio of Silicon Material (%) | | | PCs | 86.8 | 81.1 | 58.2 |
| | Particle Diameter Ratio | Core Material /Silicon Material | | cD50 /sD50 | 163.6 | 200.1 | 134.4 |
| | | TNO /Silicon Material | | Dtn /sD50 | 196.1 | 168.6 | 236.4 |
| | Total Number Ratio of Particles | TNO /Silicon Material | | Log(Qs /Qtn) | 5.1 | 4.9 | 5.1 |
| | Weight Ratio | TNO /Silicon Material | | Wtn /Ws | 105.9 | 97.2 | 190.6 |
| Anode | Weight of Core Material | | | tWc | 1.00 | 1.00 | 1.00 |
| | Weight of Silicon Material | | | tWs | 1.00 | 1.00 | 1.00 |
| | tWc/tWs | | | | 1.0 | 1.0 | 1.0 |
| Battery | Temperature | | | | – | – | – |
| | C-rate | | | | – | – | – |
| | Discharge Volumetric Capacity (mAh/cm$^3$) | V1 | Discharge | | – | – | – |
| | | | Charge | | – | – | – |
| | | V5 | Discharge | | – | – | – |
| | | | Charge | | – | – | – |
| | | V10 | Discharge | | – | – | – |
| | | | Charge | | – | – | – |
| | | V50 | Discharge | | – | – | – |
| | | | Charge | | – | – | – |
| | | V100 | Discharge | | – | – | – |
| | | | Charge | | – | – | – |
| | Maximum among Discharge Volumetric Capacities of First Cycle to Twentieth Cycle | | | VMax | – | – | – |
| | Discharge Volumetric Capacity of Tenth Cycle/Discharge Volumetric Capacity of Fifth Cycle | | | V10/V5 | – | – | – |

| Discharge Volumetric Capacity of Fiftieth Cycle/Discharge Volumetric Capacity of Fifth Cycle | V50/V5 | - | - | - |
|---|---|---|---|---|
| Discharge Volumetric Capacity of One-Hundredth Cycle/Discharge Volumetric Capacity of Fifth Cycle | V100/V5 | - | - | - |
| Total Number of Coulombic Efficiency Greater than 90% and Smaller than 110% in First Twenty Cycles | n90E20 | - | - | - |

<6th Embodiment>

The 6th embodiment is a battery. An anode thereof includes a composition. The composition includes a core-shell structure. The core-shell structure includes a core material and a shell material. The shell material is farther away from a center of the core-shell structure than the core material.

According to the battery of the 6th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 13704.9 nm; and Dtn = 17703.4 nm.

According to the battery of the 6th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 68.6%.

According to the battery of the 6th embodiment, the polymer is polymerized from at least two types of monomers. The at least two types of monomers include a first monomer and a second monomer. The first monomer is MPS, and the second monomer is DMAEMA.

The detailed data of the battery of the 6th embodiment are shown in Table 3 below. The definitions of these parameters shown in Table 3 are the same as those stated in the 1st embodiment with corresponding values for the 6th embodiment, so an explanation in this regard will not be provided here again.

<7th Embodiment>

The 7th embodiment is a battery. An anode thereof includes a composition. The composition includes a core-shell structure. The core-shell structure includes a core material and a shell material. The shell material is farther away from a center of the core-shell structure than the core material.

According to the battery of the 7th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 12546.6 nm; and Dtn = 5080.8 nm.

According to the battery of the 7th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 64.4%.

According to the battery of the 7th embodiment, the polymer is polymerized from at least two types of monomers. The at least two types of monomers include a first monomer and a second monomer. The first monomer is MPS, and the second monomer is DMAEMA.

The detailed data of the battery of the 7th embodiment are shown in Table 3 below. The definitions of these parameters shown in Table 3 are the same as those stated in the 1st embodiment with corresponding values for the 7th embodiment, so an explanation in this regard will not be provided here again.

<8th Embodiment>

The 8th embodiment is a battery. An anode thereof includes a composition. The composition includes a core-shell structure. The core-shell structure includes a core material and a shell material. The shell material is farther away from a center of the core-shell structure than the core material.

According to the battery of the 8th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 9952.2 nm; and Dtn = 6834.9 nm.

According to the battery of the 8th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 66.3%.

According to the battery of the 8th embodiment, the polymer is polymerized from at least two types of monomers. The at least two types of monomers include a first monomer and a second monomer. The first monomer is MPS, and the second monomer is DMAEMA.

The detailed data of the battery of the 8th embodiment are shown in Table 3 below. The definitions of these parameters shown in Table 3 are the same as those stated in the 1st embodiment with corresponding values for the 8th embodiment, so an explanation in this regard will not be provided here again.

| Table 3 - Batteries of 6th Embodiment, 7th Embodiment and 8th Embodiment | | | | | 6th Embodiment | 7th Embodiment | 8th Embodiment |
|---|---|---|---|---|---|---|---|
| Core-Shell Structure | Core | Material | | | Structural Element Oxide | Structural Element Oxide | Structural Element Oxide |
| | | | | | TNO | TNO | TNO |
| | | Particle Diameter of D50 (nm) | cD50 | | 13704.9 | 12546.6 | 9952.2 |
| | | Single Particle Diameter of TNO (nm) | Dtn | | 17703.4 | 5080.8 | 6834.9 |
| | Shell | Mixed Material | Material 1 | | Silicon Material | Silicon Material | Silicon Material |
| | | | Particle Diameter of D50 (nm) | sD50 | 80.0 | 80.0 | 80.0 |
| | | | Material 2 | First Monomer | MPS | MPS | MPS |
| | | | | Second Monomer | DMAEMA | DMAEMA | DMAEMA |
| | | Covering Ratio of Silicon Material (%) | PCs | | 68.6 | 64.4 | 66.3 |
| | Particle Diameter | Core Material /Silicon Material | cD50 /sD50 | | 171.3 | 156.8 | 124.4 |

| | Ratio | TNO /Silicon Material | Dtn /sD50 | 221.3 | 63.5 | 85.4 |
|---|---|---|---|---|---|---|
| | Total Number Ratio of Particles | TNO /Silicon Material | Log(Qs /Qtn) | 5.1 | 4.0 | 4.3 |
| | Weight Ratio | TNO /Silicon Material | Wtn /Ws | 151.3 | 45.2 | 59.6 |
| Anode | Weight of Core Material | | tWc | 1.00 | 1.00 | 1.00 |
| | Weight of Silicon Material | | tWs | 1.00 | 1.00 | 1.00 |
| | tWc/tWs | | | 1.0 | 1.0 | 1.0 |
| Battery | Temperature | | | - | - | - |
| | C-rate | | | - | - | - |
| | Discharge Volumetric Capacity (mAh/cm$^3$) | V1 | Discharge | - | - | - |
| | | | Charge | - | - | - |
| | | V5 | Discharge | - | - | - |
| | | | Charge | - | - | - |
| | | V10 | Discharge | - | - | - |
| | | | Charge | - | - | - |
| | | V50 | Discharge | - | - | - |
| | | | Charge | - | - | - |
| | | V100 | Discharge | - | - | - |
| | | | Charge | - | - | - |
| | Maximum among Discharge Volumetric Capacities of First Cycle to Twentieth Cycle | VMax | | - | - | - |
| | Discharge Volumetric Capacity of Tenth Cycle/Discharge Volumetric Capacity of Fifth Cycle | V10/V5 | | - | - | - |
| | Discharge Volumetric Capacity of Fiftieth Cycle/Discharge Volumetric Capacity of Fifth Cycle | V50/V5 | | - | - | - |
| | Discharge Volumetric Capacity of One-Hundredth Cycle/Discharge Volumetric Capacity of Fifth Cycle | V100/V5 | | - | - | - |
| | Total Number of Coulombic Efficiency Greater than 90% and Smaller than 110% in First Twenty Cycles | n90E20 | | - | - | - |

<9th Embodiment>

The 9th embodiment is a battery. An anode thereof includes a composition. The composition includes a core-shell structure. The core-shell structure includes a core material and a shell material. The shell material is farther away from a center of the core-shell structure than the core material.

According to the battery of the 9th embodiment, the core material includes a structural element oxide. The structural element oxide includes a niobium-titanium complex oxide. When a particle diameter of the core material at D50 is cD50, and a particle diameter of the niobium-titanium complex oxide is Dtn, the following conditions are satisfied: cD50 = 4099.1 nm; and Dtn = 4107.2 nm.

According to the battery of the 9th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 41.2%.

According to the battery of the 9th embodiment, the polymer is polymerized from at least two types of monomers. The at least two types of monomers include a first monomer and a second monomer. The first monomer is MPS, and the second monomer is DMAEMA.

The detailed data of the battery of the 9th embodiment are shown in Table 4 below. The definitions of these parameters shown in Table 4 are the same as those stated in the 1st embodiment with corresponding values for the 9th embodiment, so an explanation in this regard will not be provided here again.

<10th Embodiment>

The 10th embodiment is a battery. An anode thereof includes a composition. The composition includes a core-shell structure. The core-shell structure includes a core material and a shell material. The shell material is farther away from a center of the core-shell structure than the core material.

According to the battery of the 10th embodiment, the core material includes a structural element oxide. The structural element oxide includes a niobium-titanium complex oxide. A particle diameter of the core material at D50 is cD50, the following condition is satisfied: cD50 = 14935.3 nm.

According to the battery of the 10th embodiment, the shell material includes a mixed material. The mixed material includes a modified silicon material. The modified silicon material includes a silicon material and a polymer. When a particle diameter of the silicon material at D50 is sD50, and a covering ratio of the silicon material relative to the core material is PCs, the following conditions are satisfied: sD50 = 80.0 nm; and PCs = 32.0%.

According to the battery of the 10th embodiment, the polymer is polymerized from at least two types of monomers. The at least two types of monomers include a first monomer and a second monomer. The first monomer is MPS, and the second monomer is DMAEMA.

The detailed data of the battery of the 10th embodiment are shown in Table 4 below. The definitions of these parameters shown in Table 4 are the same as those stated in the 1st embodiment with corresponding values for the 10th embodiment, so an explanation in this regard will not be provided here again.

<11th Embodiment>

The 11th embodiment is a battery. An anode thereof includes a composition. The composition includes a core-shell structure. The core-shell structure includes a core material and a shell material. The shell material is farther away from a center of the core-shell structure than the core material.

According to the battery of the 11th embodiment, the core material includes a structural element oxide. The structural element oxide includes a lithium-titanium complex oxide. A particle diameter of the core material at D50 is cD50, the following condition is satisfied: cD50 = 28439.3 nm.

According to the battery of the 11th embodiment, the shell material includes a mixed material. The mixed material includes a modified silicon material. The modified silicon material includes a silicon material and a polymer. When a particle diameter of the silicon material at D50 is sD50, the following condition is satisfied: sD50 = 80.0 nm.

According to the battery of the 11th embodiment, the polymer is polymerized from at least two types of monomers. The at least two types of monomers include a first monomer and a second monomer. The first monomer is MPS, and the second monomer is AA.

The detailed data of the battery of the 11th embodiment are shown in Table 4 below. The definitions of these parameters shown in Table 4 are the same as those stated in the 1st embodiment with corresponding values for the 11th embodiment, so an explanation in this regard will not be provided here again.

| Table 4 - Batteries of 9th Embodiment, 10th Embodiment and 11th Embodiment | | | |
|---|---|---|---|
| | 9th Embodiment | 10th Embodiment | 11th Embodiment |

| | | | | | Structural Element Oxide | Structural Element Oxide | Structural Element Oxide |
|---|---|---|---|---|---|---|---|
| Core-Shell Structure | Core | Material | | | TNO | TNO | lithium-titanium complex oxide |
| | | Particle Diameter of D50 (nm) | | cD50 | 4099.1 | 14935.3 | 28439.3 |
| | | Single Particle Diameter of TNO (nm) | | Dtn | 4107.2 | - | - |
| | Shell | Mixed Material | Material 1 | | Silicon Material | Silicon Material | Silicon Material |
| | | | Particle Diameter of D50 (nm) | sD50 | 80.0 | 80.0 | 80.0 |
| | | | Material 2 — First Monomer | | MPS | MPS | MPS |
| | | | Material 2 — Second Monomer | | DMAEMA | DMAEMA | AA |
| | | Covering Ratio of Silicon Material (%) | | PCs | 41.2 | 32.0 | - |
| | Particle Diameter Ratio | Core Material /Silicon Material | | cD50 /sD50 | 51.2 | 186.7 | 355.5 |
| | | TNO /Silicon Material | | Dtn /sD50 | 51.3 | - | - |
| | Total Number Ratio of Particles | TNO /Silicon Material | | Log(Qs /Qtn) | 3.6 | - | - |
| | Weight Ratio | TNO /Silicon Material | | Wtn /Ws | 56.7 | - | - |
| Anode | Weight of Core Material | | | tWc | 1.00 | 1.00 | - |
| | Weight of Silicon Material | | | tWs | 1.00 | 0.05 | - |
| | tWc/tWs | | | | 1.0 | 20.0 | - |
| Battery | Temperature | | | | - | - | - |
| | C-rate | | | | - | - | - |
| | Discharge Volumetric Capacity (mAh/cm$^3$) | V1 | Discharge | | - | - | - |
| | | | Charge | | - | - | - |
| | | V5 | Discharge | | - | - | - |
| | | | Charge | | - | - | - |
| | | V10 | Discharge | | - | - | - |
| | | | Charge | | - | - | - |
| | | V50 | Discharge | | - | - | - |
| | | | Charge | | - | - | - |

| | V100 | Discharge | ‑ | - | - |
|---|---|---|---|---|---|
| | | Charge | - | - | - |
| Maximum among Discharge Volumetric Capacities of First Cycle to Twentieth Cycle | VMax | | - | - | - |
| Discharge Volumetric Capacity of Tenth Cycle/Discharge Volumetric Capacity of Fifth Cycle | V10/V5 | | - | - | - |
| Discharge Volumetric Capacity of Fiftieth Cycle/Discharge Volumetric Capacity of Fifth Cycle | V50/V5 | | - | - | - |
| Discharge Volumetric Capacity of One-Hundredth Cycle/Discharge Volumetric Capacity of Fifth Cycle | V100/V5 | | - | - | - |
| Total Number of Coulombic Efficiency Greater than 90% and Smaller than 110% in First Twenty Cycles | n90E20 | | - | - | - |

<12th Embodiment>

The 12th embodiment is a battery. An anode thereof includes a composition. The composition includes a core-shell structure. The core-shell structure includes a core material and a shell material. The shell material is farther away from a center of the core-shell structure than the core material.

According to the battery of the 12th embodiment, the core material includes a structural element oxide. The structural element oxide includes a structural element complex oxide. When a particle diameter of the core material at D50 is cD50, the following condition is satisfied: cD50 = 595.6 nm.

According to the battery of the 12th embodiment, the shell material includes a mixed material. The mixed material includes a modified silicon material. The modified silicon material includes a silicon material and a polymer. When a particle diameter of the silicon material at D50 is sD50, the following condition is satisfied: sD50 = 80.0 nm.

According to the battery of the 12th embodiment, the polymer is polymerized from at least two types of monomers. The at least two types of monomers include a first monomer and a second monomer. The first monomer is MPS, and the second monomer is MMA.

The detailed data of the battery of the 12th embodiment are shown in Table 5 below. The definitions of these parameters shown in Table 5 are the same as those stated in the 1st embodiment with corresponding values for the 12th embodiment, so an explanation in this regard will not be provided here again.

<13th Embodiment>

The 13th embodiment is a battery. An anode thereof includes a composition. The composition includes a core-shell structure. The core-shell structure includes a core material and a shell material. The shell material is farther away from a center of the core-shell structure than the core material.

According to the battery of the 13th embodiment, the core material includes a structural element oxide. The structural element oxide includes a structural element complex oxide. When a particle diameter of the core material at D50 is cD50, the following condition is satisfied: cD50 = 606.6 nm.

According to the battery of the 13th embodiment, the shell material includes a mixed material. The mixed material includes a modified silicon material. The modified silicon material includes a silicon material and a polymer. When a particle diameter of the silicon material at D50 is sD50, the following condition is satisfied: sD50 = 80.0 nm.

According to the battery of the 13th embodiment, the polymer is polymerized from at least two types of monomers. The at least two types of monomers include a first monomer and a second monomer. The first monomer is MPS, and the second monomer is MA.

The detailed data of the battery of the 13th embodiment are shown in Table 5 below. The definitions of these parameters shown in Table 5 are the same as those stated in the 1st embodiment with corresponding values for the 13th embodiment, so an explanation in this regard will not be provided here again.

<14th Embodiment>

The 14th embodiment is a battery. An anode thereof includes a composition. The composition includes a core-shell structure. The core-shell structure includes a core material and a shell material. The shell material is farther away from a center of the core-shell structure than the core material.

According to the battery of the 14th embodiment, the core material includes a carbon active material. The carbon active material includes graphite. When a particle diameter of the core material at D50 is cD50, the following condition is satisfied: cD50 = 13290.0 nm.

According to the battery of the 14th embodiment, the shell material includes a mixed material. The mixed material includes a modified silicon material. The modified silicon material includes a silicon material and a polymer. When a particle diameter of the silicon material at D50 is sD50, the following condition is satisfied: sD50 = 80.0 nm.

According to the battery of the 14th embodiment, the polymer is polymerized from at least two types of monomers. The at least two types of monomers include a first monomer and a second monomer. The first monomer is MPS, and the second monomer is 2EHA.

The detailed data of the battery of the 14th embodiment are shown in Table 5 below. The definitions of these parameters shown in Table 5 are the same as those stated in the 1st embodiment with corresponding values for the 14th embodiment, so an explanation in this regard will not be provided here again.

| Table 5 - Batteries of 12th Embodiment, 13th Embodiment and 14th Embodiment | | | | | 12th Embodiment | 13th Embodiment | 14th Embodiment |
|---|---|---|---|---|---|---|---|
| Core-Shell Structure | Core | Material | | | Structural Element Oxide | Structural Element Oxide | Carbon Active Material |
| | | | | | structural element complex oxide | structural element complex oxide | Graphite |
| | | Particle Diameter of D50 (nm) | cD50 | | 595.6 | 606.6 | 13290.0 |
| | | Single Particle Diameter of TNO (nm) | Dtn | | - | - | - |
| | Shell | Mixed Material | Material 1 | | Silicon Material | Silicon Material | Silicon Material |
| | | | Particle Diameter of D50 (nm) | sD50 | 80.0 | 80.0 | 80.0 |
| | | | Material 2 | First Monomer | MPS | MPS | MPS |
| | | | | Second Monomer | MMA | MA | 2EHA |
| | | Covering Ratio of Silicon Material (%) | PCs | | - | - | - |
| | Particle Diameter | Core Material /Silicon Material | cD50 /sD50 | | 7.4 | 7.6 | 166.1 |

| | | | | | | |
|---|---|---|---|---|---|---|
| | Ratio | TNO /Silicon Material | Dtn /sD50 | - | - | - |
| | Total Number Ratio of Particles | TNO /Silicon Material | Log(Qs /Qtn) | - | - | - |
| | Weight Ratio | TNO /Silicon Material | Wtn /Ws | - | - | - |
| Anode | Weight of Core Material | | tWc | - | - | - |
| | Weight of Silicon Material | | tWs | - | - | - |
| | tWc/tWs | | | - | - | - |
| Battery | Temperature | | | - | - | - |
| | C-rate | | | - | - | - |
| | Discharge Volumetric Capacity (mAh/cm$^3$) | V1 | Discharge | - | - | - |
| | | | Charge | - | - | - |
| | | V5 | Discharge | - | - | - |
| | | | Charge | - | - | - |
| | | V10 | Discharge | - | - | - |
| | | | Charge | - | - | - |
| | | V50 | Discharge | - | - | - |
| | | | Charge | - | - | - |
| | | V100 | Discharge | - | - | - |
| | | | Charge | - | - | - |
| | Maximum among Discharge Volumetric Capacities of First Cycle to Twentieth Cycle | | VMax | - | - | - |
| | Discharge Volumetric Capacity of Tenth Cycle/Discharge Volumetric Capacity of Fifth Cycle | | V10/V5 | - | - | - |
| | Discharge Volumetric Capacity of Fiftieth Cycle/Discharge Volumetric Capacity of Fifth Cycle | | V50/V5 | - | - | - |
| | Discharge Volumetric Capacity of One-Hundredth Cycle/Discharge Volumetric Capacity of Fifth Cycle | | V100/V5 | - | - | - |
| | Total Number of Coulombic Efficiency Greater than 90% and Smaller than 110% in First Twenty Cycles | | n90E20 | - | - | - |

**Claims**

1. A composition, **characterized in** comprising:

a core-shell structure comprising a core material and a shell material, and the shell material being farther away from a center of the core-shell structure than the core material;

wherein the core material comprises a structural element oxide, the structural element oxide comprises a structural element, the structural element comprises at least two selected from the group consisting of lithium, titanium, niobium, cobalt, copper, tin, silicon, iron, manganese and nickel;

wherein the shell material comprises a mixed material, the mixed material comprises a modified silicon material, and the modified silicon material comprises a silicon material and a polymer.

2. The composition of claim 1, wherein a particle diameter of the core material at D50 is cD50, and the following condition is satisfied:

$$100.0 \text{ nm} \leq cD50 \leq 80000.0 \text{ nm}.$$

3. The composition of claim 1 or claim 2, wherein a particle diameter of the silicon material at D50 is sD50, and the following condition is satisfied:

$$10.0 \text{ nm} \leq sD50 \leq 3000.0 \text{ nm}.$$

4. The composition of any one of claims 1-3, wherein a particle diameter of the core material at D50 is cD50, a particle diameter of the silicon material at D50 is sD50, and the following condition is satisfied:

$$1.0 \leq cD50/sD50 \leq 8000.0.$$

5. The composition of any one of claims 1-4, wherein a weight of the core material in the core-shell structure is larger than a weight of the silicon material in the core-shell structure.

6. The composition of any one of claims 1-5, wherein the structural element oxide is a niobium-titanium complex oxide.

7. The composition of claim 6, wherein a weight of the niobium-titanium complex oxide relative to the core-shell structure is Wtn, a weight of the silicon material relative to the core-shell structure is Ws, and the following condition is satisfied:

$$10.0 \leq Wtn/Ws \leq 500.0.$$

8. The composition of claim 6 or claim 7, wherein the niobium-titanium complex oxide is a doped niobium-titanium complex oxide.

9. The composition of claim 8, wherein the doped niobium-titanium complex oxide comprises at least one doped element, the at least one doped element is at least one selected from the group consisting of lithium, manganese, magnesium, iron, copper, cobalt, gallium, tantalum, tungsten, fluorine, phosphorus, sodium and molybdenum.

10. The composition of claim 9, wherein the at least one doped element is at least one selected from the group consisting of lithium, manganese, magnesium, iron, copper, fluorine and phosphorus.

11. The composition of any one of claims 1-10, wherein the polymer is polymerized from at least two types of monomers, the at least two types of monomers comprise a first monomer and a second monomer;

wherein the first monomer comprises a siloxane group, the second monomer comprises a carboxyl group or an ester group;
wherein the first monomer is closer to the silicon material than the second monomer.

12. The composition of any one of claims 1-11, wherein the silicon material and the polymer are covalent bonded.

13. The composition of any one of claims 1-12, wherein the mixed material further comprises a carbon material.

14. An anode, **characterized in** comprising:
the composition of any one of claims 1-13.

15. The anode of claim 14, wherein a weight of the core material in the anode is tWc, a weight of the silicon material in the anode is tWs, and the following condition is satisfied:

$$0.1 \leq tWc/tWs \leq 100.0.$$

16. A battery, **characterized in** comprising:
    the anode of claim 14 or claim 15.

17. The battery of claim 16, wherein a maximum among a discharge volumetric capacity of a first cycle to a discharge volumetric capacity of a twentieth cycle of the battery is VMax, and the following condition is satisfied:

$$100 \ mAh/cm^3 \leq VMax \leq 800 \ mAh/cm^3.$$

18. The battery of claim 16 or claim 17, wherein a discharge volumetric capacity of a fifth cycle of the battery is V5, a discharge volumetric capacity of a tenth cycle of the battery is V10, and the following condition is satisfied:

$$0.85 \leq V10/V5.$$

19. The battery of any one of claims 16-18, wherein a discharge volumetric capacity of a fifth cycle of the battery is V5, a discharge volumetric capacity of a fiftieth cycle of the battery is V50, and the following condition is satisfied:

$$0.80 \leq V50/V5.$$

20. The battery of any one of claims 16-19, wherein a discharge volumetric capacity of a fifth cycle of the battery is V5, a discharge volumetric capacity of a one-hundredth cycle of the battery is V100, and the following condition is satisfied:

$$0.70 \leq V100/V5.$$

21. The battery of any one of claims 16-20, wherein a total number of Coulombic efficiency greater than 90% and smaller than 110% in first twenty cycles of the battery is n90E20, and the following condition is satisfied:

$$15 \leq n90E20 \leq 20.$$

22. A composition, **characterized in** comprising:

    a core-shell structure comprising a core material and a shell material, and the shell material being farther away from a center of the core-shell structure than the core material;
    wherein the core material comprises a structural element oxide, the structural element oxide comprises a niobium-titanium complex oxide;
    wherein the shell material comprises a mixed material, the mixed material comprises a silicon material;
    wherein a covering ratio of the silicon material relative to the core material is PCs, and the following condition is satisfied:

$$20.0\% \leq PCs \leq 100.0\%.$$

23. The composition of claim 22, wherein a total number of particles of the niobium-titanium complex oxide in the core-shell structure is Qtn, a total number of particles of the silicon material in the core-shell structure is Qs, and the following condition is satisfied:

$$0.1 \leq Log(Qs/Qtn) < 10.0.$$

24. The composition of claim 22 or claim 23, wherein the covering ratio of the silicon material relative to the core material is PCs, and the following condition is satisfied:

$$40.0\% \leq PCs \leq 95.0\%.$$

25. The composition of any one of claims 22-24, wherein the total number of particles of the niobium-titanium complex oxide in the core-shell structure is Qtn, the total number of particles of the silicon material in the core-shell structure is Qs, and the following condition is satisfied:

$$2.5 \leq Log(Qs/Qtn) \leq 7.5.$$

26. The composition of any one of claims 22-25, wherein a particle diameter of the niobium-titanium complex oxide is Dtn, a particle diameter of the silicon material at D50 is sD50, and the following condition is satisfied:

$$20.0 \leq Dtn/sD50 \leq 500.0.$$

27. The composition of any one of claims 22-26, wherein the niobium-titanium complex oxide is a doped niobium-titanium complex oxide.

28. The composition of claim 27, wherein the doped niobium-titanium complex oxide comprises at least one doped element, and the at least one doped element is at least one selected from the group consisting of lithium, manganese, magnesium, iron, copper, fluorine and phosphorus.

29. The composition of any one of claims 22-28, wherein a weight of the niobium-titanium complex oxide relative to the core-shell structure is Wtn, a weight of the silicon material relative to the core-shell structure is Ws, and the following condition is satisfied:

$$20.0 \leq Wtn/Ws \leq 300.0.$$

30. An anode, **characterized in** comprising:
the composition of any one of claims 22-29.

31. A battery, **characterized in** comprising:
the anode of claim 30.

32. A composition, **characterized in** comprising:

a core-shell structure comprising a core material and a shell material, and the shell material being farther away from a center of the core-shell structure than the core material;
wherein the core material is at least one selected from the group consisting of a carbon active material, a structural element mixed oxide and a tin alloy;
wherein the shell material comprises a mixed material, the mixed material comprises a modified silicon material, the modified silicon material comprises a silicon material and a polymer, the polymer comprises a siloxane group;
wherein a particle diameter of the core material at D50 is cD50, a particle diameter of the silicon material at D50 is sD50, and the following condition is satisfied:

$$1.0 \leq cD50/sD50 \leq 8000.0.$$

33. The composition of claim 32, wherein the particle diameter of the core material at D50 is cD50, the particle diameter of the silicon material at D50 is sD50, and the following condition is satisfied:

$$50.0 \leq cD50/sD50 \leq 500.0.$$

Fig. 1

5 μm

Fig. 2A

Fig. 2B

Fig. 3

Fig. 4

Europäisches
Patentamt
European
Patent Office
Office européen
des brevets

# EUROPEAN SEARCH REPORT

Application Number

EP 24 19 6740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/178246 A1 (UNIV CALIFORNIA [US]) 25 August 2022 (2022-08-25) <br> * abstract * <br> * paragraphs [0161] - [0165]; figure 1 * <br> * paragraphs [00166] - [00170]; figure 2 * <br> * claims 1-27 * | 1-33 | INV. <br> H01M4/36 <br> H01M4/38 <br> H01M4/62 |
| X | US 2023/170476 A1 (SHIM KYUEUN [KR] ET AL) 1 June 2023 (2023-06-01) <br> * abstract * <br> * claims 1-20 * <br> * examples 1-8 * | 1-33 | |
| A | US 2023/238571 A1 (ZHAMU ARUNA [US] ET AL) 27 July 2023 (2023-07-27) <br> * abstract * <br> * paragraphs [0010] - [0019] * | 1-33 | |
| A | US 2021/296650 A1 (LIU MINGRUI [US] ET AL) 23 September 2021 (2021-09-23) <br> * paragraph [0023] * <br> * abstract * | 1-33 | |
| A | US 2020/194785 A1 (JUNG HEECHUL [KR] ET AL) 18 June 2020 (2020-06-18) <br> * abstract * <br> * claims 1-28 * | 1-33 | TECHNICAL FIELDS SEARCHED (IPC) <br><br> H01M |
| A | CN 116 190 588 A (SAMSUNG SDI CO LTD) 30 May 2023 (2023-05-30) <br> * abstract * <br> * claims 1-20 * | 1-33 | |
| X,P | CN 117 199 251 A (LARGAN MEDICAL CO LTD) 8 December 2023 (2023-12-08) <br> * the whole document * | 1-33 | |

The present search report has been drawn up for all claims

| Place of search | Date of completion of the search | Examiner |
|---|---|---|
| Munich | 24 January 2025 | Stachowiak, Olaf |

EPO FORM 1503 03.82 (P04C01)

## ANNEX TO THE EUROPEAN SEARCH REPORT
## ON EUROPEAN PATENT APPLICATION NO.

EP 24 19 6740

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | | Publication date | Patent family member(s) | | Publication date |
|---|---|---|---|---|---|
| WO 2022178246 | A1 | 25-08-2022 | CN | 116964802 A | 27-10-2023 |
| | | | EP | 4295430 A1 | 27-12-2023 |
| | | | JP | 2024507490 A | 20-02-2024 |
| | | | KR | 20230148179 A | 24-10-2023 |
| | | | US | 2024113282 A1 | 04-04-2024 |
| | | | WO | 2022178246 A1 | 25-08-2022 |
| US 2023170476 | A1 | 01-06-2023 | CN | 116190588 A | 30-05-2023 |
| | | | EP | 4187633 A1 | 31-05-2023 |
| | | | JP | 7577720 B2 | 05-11-2024 |
| | | | JP | 2023079217 A | 07-06-2023 |
| | | | KR | 20230078383 A | 02-06-2023 |
| | | | US | 2023170476 A1 | 01-06-2023 |
| US 2023238571 | A1 | 27-07-2023 | US | 2023238571 A1 | 27-07-2023 |
| | | | WO | 2023147397 A1 | 03-08-2023 |
| US 2021296650 | A1 | 23-09-2021 | US | 2021296650 A1 | 23-09-2021 |
| | | | US | 2024363867 A1 | 31-10-2024 |
| US 2020194785 | A1 | 18-06-2020 | CN | 111326729 A | 23-06-2020 |
| | | | KR | 20200073350 A | 24-06-2020 |
| | | | US | 2020194785 A1 | 18-06-2020 |
| CN 116190588 | A | 30-05-2023 | CN | 116190588 A | 30-05-2023 |
| | | | EP | 4187633 A1 | 31-05-2023 |
| | | | JP | 7577720 B2 | 05-11-2024 |
| | | | JP | 2023079217 A | 07-06-2023 |
| | | | KR | 20230078383 A | 02-06-2023 |
| | | | US | 2023170476 A1 | 01-06-2023 |
| CN 117199251 | A | 08-12-2023 | CN | 117199251 A | 08-12-2023 |
| | | | CN | 220963396 U | 14-05-2024 |
| | | | EP | 4290599 A1 | 13-12-2023 |
| | | | JP | 2023180229 A | 20-12-2023 |
| | | | KR | 20230168977 A | 15-12-2023 |
| | | | TW | 202349771 A | 16-12-2023 |
| | | | US | 2023402587 A1 | 14-12-2023 |

EPO FORM P0459

For more details about this annex : see Official Journal of the European Patent Office, No. 12/82